# EUROPEAN PATENT SPECIFICATION

(11) **EP 4 240 792 B1**
(45) Date of publication and mention of the grant of the patent: **03.04.2024**
(21) Application number: 22728298.5
(22) Date of filing: 03.06.2022
(51) Int. Cl.: C08J 11/28, C08C 19/08, C08K 5/14, C08K 5/21, C08J 11/22, B29B 7/46

(54) **DEVULCANIZING ADDITIVE, RELATIVE METHOD OF DEVULCANIZATION AND DEVULCANIZED PRODUCT**
DEVULKANISIERUNGSADDITIV, ZUGEHÖRIGES VERFAHREN ZUR DEVULKANISIERUNG UND DEVULKANISIERTES PRODUKT
ADDITIF DE DÉVULCANISATION, PROCÉDÉ DE DÉVULCANISATION ASSOCIÉ ET PRODUIT DÉVULCANISÉ

(30) Priority: 04.06.2021 IT 202100014606
(43) Date of publication of application: 13.09.2023
(73) Proprietor: Rubber Conversion S.r.l., 37139 Verona (IT)
(72) Inventor: FOCHESATO COLOMBANI, Filippo, 36100 Vicenza (IT)
(74) Representative: De Gregori, Antonella
(86) International application number: PCT/IB2022/055186
(87) International publication number: WO 2022/254390

(56) References cited:
- WO-A1-01/29122
- WO-A1-2020/169589
- CN-A- 112 458 445
- DE-A1- 3 903 825
- US-A- 4 305 850
- US-A1- 2017 362 407
- US-B2- 9 175 155

## Description

The present invention relates to a devulcanizing additive for vulcanized elastomers, said additive having an improved efficiency and selectivity, the relative devulcanization method, in continuous and batchwise, and the devulcanized product obtained by means of said method for the devulcanization of vulcanized elastomers.

### Description of the state of the art:

It is well known that vulcanized elastomers are products obtained by means of a crosslinking treatment of elastomeric polymers. The crosslinking process creates a three-dimensional crosslinking structure that gives the final product particular physical-mechanical characteristics such as hardness, elasticity, abrasion resistance and durability. Thanks to these specific characteristics, the vulcanized product thus obtained is suitable for multiple civil and industrial uses.

There are different vulcanization methods: the main method involves the use of sulfur and its derivatives (Sulfur or Sulfur-cured vulcanization); a second widely used vulcanization method involves the use of peroxides (peroxide or peroxide-cured vulcanization). For each type of vulcanization, numerous subclasses are identified depending on the efficiency of the reaction, the kinetics and the additives used.

Vulcanization therefore creates a network of bonds between the molecular chains with three types of bonds: S-S (sulfur-sulfur). C-S (carbon-sulfur), C-C (carbon-carbon between different molecular chains).

Devulcanization involves breaking the crosslinking bonds, restoring the original, non-crosslinked structure of the elastomer; whereas the breakage of the C-C bonds in the same molecular chain, on the other hand, leads to an apparent increase in the degree of devulcanization, it involves a reduction in the average molecular weight of the polymer, with a drastic reduction in the physical-mechanical properties of the final product obtained. The polymer, in fact, is not restored to its initial characteristics, but is randomly demolished, producing a fragmentation of the linearity of the polymer chains and thus making a valid re-use of the product obtained impossible. On the other hand, the more the devulcanization is selective towards the crosslinking bonds alone, the more it will allow the physical-mechanical properties of the polymer to be safeguarded, allowing re-use for new products of the devulcanized product thus obtained.

The most widespread definition of devulcanization is given by the standard ASTM D6814-02, which defines devulcanization as "a process of breaking down chemical crosslink in cured rubber"; this regulation defines the standard for measuring the degree of devulcanization.

For vulcanized blends with a high addition of fillers, such as carbon black and silicas, typical of the products recovered from end-of-life tyres (ELTs), the Kraus correction can be useful, which calculates the devulcanization degree with greater precision, taking into adequate account the inert parts of the mixture (KRAUS, G. (1963) Swelling of Filler Reinforced Vulcanisates. J. appl. Polym. Sci., 7, 861-871).

The selectivity of the reaction, i.e. the specificity of the devulcanization towards the breaking of the crosslinking bonds alone, is calculated by means of the Horikx equations and the corresponding Horikx diagram (Seghar, Said; Asaro, Lucía; Ait Hocine, Nourredine; Experimental Validation of the Horikx Theory to be Used in the Rubber Devulcanization Analysis; Springer/Plenum Publishers; Journal of Polymers and the Environment; 27; 10; 7-2019; 2318-2323).

The diagram calculates the theoretical curves relating to the selective cleavage of the crosslinking bonds alone; the values relating to the devulcanized products obtained are then calculated: the more these values can be superimposed on the theoretical curves, the more they reflect the selectivity in the cleavage of the crosslinking bonds alone of the theoretical curve.

The selective devulcanization of elastomers has been an active line of research since the middle of the last century. These, however, were generally ineffective and coarse approaches, intended for the recovery of the raw material, for its reuse as a comburent for energy recovery, as an inert for cementitious products or as a non-reactive filler in thermoplastic or elastomeric blends.

The simplest mechanical and thermal methods are limited to a simple mechanical processing, by means of grinding which, in fact, produces a mere reduction in the particle size of the vulcanized product, without carrying out an effective devulcanization. It is known in fact that all the methods for recovering devulcanized elastomers provide for a first grinding step of the starting vulcanized product which is normally large in size; for example, a tyre is reduced by grinding to an irregular ground product in the order of centimeters or millimeters and then separated by density into its main components.

Other methods involve the use of high temperatures obtained by mechanical stress, in open or closed mixers, or in a co-rotating or counter-rotating twin-screw extruder. These methods provide energy in an undifferentiated way to the vulcanized elastomer, causing a non-selective devulcanization, with a strong reduction in molecular weights and mechanical properties. These methods often cause a significant release of gases containing sulfur dioxide or other gases resulting from the thermal degradation of the products contained in the treated elastomer. The treatment with vacuum suction systems of the mass subjected to this treatment reduces odours, but does not prevent the mechanical degradation of the product.

Alternatively, this energy is supplied partially selectively by microwaves or ultrasounds. Also in this case, a non-optimal devulcanization is caused, with a significant reduction in molecular weights and mechanical properties.

Some chemical or mechano-chemical methods use the treatment of the vulcanized elastomer with organic solvents at room temperature or at temperatures below the boiling point of the solvent. The lengthy times and the difficulties in handling the solvents make these methods not very applicable.

Alternatively, methods are known which use the chemical properties of supercritical CO₂, applied for example by addition to the molten mass. This method however, provides for a high-temperature extrusion treatment, with a consequent loss of the devulcanization selectivity.

The most recent mechano-chemical methods show how, especially in the case of sulfur-vulcanized elastomers, some of the raw materials used for inducing, modulating, or terminating the vulcanization reaction, if applied in the appropriate conditions and quantities on vulcanized elastomers, can contribute to an efficient devulcanization. Chemical methods that use dimethyldithiocarbamate and mercaptobenzothiazole or methods that use primary and secondary amines and imines, also aromatic, belong to this line of research.

Other methods use derivatives of urea mixed with dicarboxylic acids, processed at low temperature in open mixers or in closed mixers.

Whereas these more recent mechano-chemical methods improve the selectivity of the reaction, they have numerous disadvantages: a first problem is linked to the fact that some of these reagents do not react completely during devulcanization, especially if applied with a low-temperature process, and therefore remain unreacted in the devulcanized product. Remaining unreacted inside the devulcanized mixture, these reagents, as they belong to chemical classes normally used in vulcanization or deriving from these chemical classes, can cause a subsequent revulcanization of the devulcanized mixture already in the storage phases of the material, especially in the presence of a strong temperature change, effectively nullifying the devulcanization process completely or in part. Furthermore, these reagents affect the general stoichiometric equilibrium of the subsequent vulcanization reactions, altering the rheology of the new blends, where the devulcanized product is used in a blend with virgin elastomers to obtain a second vulcanization product.

Studies have very recently been carried out on the use of heterocyclic compounds, such as 4-hydroxy-2,2,6,6-tetramethylpiperidine-1-osyl (4-hydroxy-TEMPO) used as polymerization inhibitors for preventing revulcanization phenomena of devulcanized products with a mechanical method.

Another disadvantage of the more recent mechano-chemical methods is that, due to the low molecular weights of the reactants, they can migrate to the surface of the devulcanized product when this product is used in new blends or in new products, causing unsightly and potentially dangerous deposits for the health of the user, especially in the case of products containing reagents such as amines and imines, aromatic products or sulfur and its precursors.

These surface migration phenomena, especially of amines, also occur in new blends with virgin elastomer and also when the devulcanized product is used in a low percentage in the blend. Therefore, the subsequent reprocessing in the blend and the subsequent revulcanization are often not sufficient for eliminating the problem of the migration of potentially harmful compounds on the surface of the manufactured products.

Furthermore, all the chemical and mechano-chemical methods described do not substantially take into account the kinetics of the devulcanization process: a devulcanization method that aims at effectively controlling the devulcanization reaction from a kinetic point of view is not in fact known in the state of the art. Another disadvantage of the most recent mechano-chemical methods consists in fact in the following: the chemical reagents involved react substantially in an uncontrolled way around the area in which they have been deposited, thus becoming exhausted very rapidly on the surface of the elastomer particles or where, due to the friction mechanics exerted, the material undergoes a more rapid increase in temperature. In the internal part of the particle or in the hollows and cracks that are typical of surfaces deriving from grinding, on the contrary, these reagents arrive in smaller quantities, and, as they are protected from mechanical friction and heat (elastomers are very poor heat conductors), they do not exert their action, remaining unreacted. This effect is particularly depressing for devulcanization, considering that most of the sulfur bonds are directed towards the interior of the particle, where the sulfur is thermodynamically positioned in a state of lower energy, whereas on the surface of the cold particle the sulfur is almost absent (J.S. Dick, Rubber Technology, page 353, 3rd Edition, 2020).

Consequently, from a kinetic point of view, the reagents remain mainly distributed on the surface of the elastomer, less rich in sulfur bonds, until a minimum temperature has been reached that allows the reaction; they therefore become rapidly exhausted or are incorporated and accumulated inside the particle undergoing processing, where the lower temperature does not allow their effective reaction. Even processes that claim a reaction at room temperature are in fact actually processes that exploit the temperature, whose peak values are localized only on the surface of the particle for very short times, such as to make the entire mass appear at room temperature. This statement is proven by the fact that a simple mixing without friction, for example by mixing the vulcanized elastomer and the reagents in a beaker at room temperature, does not cause any reaction. With the known chemical and mechano-chemical methods, the surface reaction is therefore too rapid to allow an effective devulcanization that gradually makes new internal layers of the particle to be devulcanized available for devulcanization.

Even in devulcanization methods that involve the use of open multiple-step roll-mills, most of the steps only serve to raise the temperature, and only the final steps produce a fast reaction of the reagents that are consumed very rapidly on the surface and may remain unreacted in the innermost parts.

From the point of view of physical, macroscopic and mechanical behaviour, all the methods described therefore have the disadvantage of carrying out a simple grinding or a predominantly surface devulcanization, as they are unable to penetrate into the vulcanized network and carry out the selective cleavage of the crosslinking bonds inside the vulcanized elastomer particle.

In order to achieve a homogeneous devulcanization, it is therefore necessary to first of all carry out an optimal grinding of the products, with an extremely regular granulometric curve, avoiding that particles having particularly larger dimensions than the others, can have a very low devulcanization degree, due to their unfavourable surface/volume ratio. These poorly devulcanized particles are in fact characterized by having poor interface characteristics when inserted into new blends, thus creating weak points from which mechanical tears propagate, responsible for the drastic drop in the performance of devulcanized products deriving from raw materials not selected for homogeneity and physical form.

In the most common case of a truck tyre, whose tread is rich in vulcanized natural rubber (NR), an economically interesting elastomer for devulcanization processes, they can weigh up to a few tens of kg, and are composed of many different parts for construction and chemical composition. The more structural internal parts are produced with less valuable materials, even with metal or synthetic fiber reinforcements, whereas the tread part is produced with more noble materials, such as natural rubber (NR)..

In the recovery process of end-of-life tyres (ELTs), the tyre then undergoes a process of surface buffing of the tread, a subsequent grinding and screening for the separation of the metals. The buffing product, called "buffing", has an extremely coarse and variable size. The buffing is subsequently further ground and screened, generating the so-called "powder" or micronized rubber powders (MRP), with the quality depending on the particle size and homogeneity of the composition.

At present, the variability of the starting product strongly influences the characteristics of the devulcanized final product, processed with the known devulcanizzazione techniques.

Consequently, in addition to the previously indicated limitations of the devulcanization methods currently in use that do not allow a selective devulcanization to be obtained, a further element that contributes to making it even more difficult to obtain a high-quality devulcanized final product is also linked to obtaining a sufficiently homogeneous devulcanization.

In this respect, in order to obtain a homogeneous devulcanization, in addition to the critical factor of the fine grinding and optimal particle-size distribution, the variability present in the crosslink density of the product to be devulcanized and in the type of intermolecular bonds that are created in the crosslinking network, contribute, said variability depending on the vulcanization method to which said vulcanized product has been subjected.

For sulfur-based vulcanization, for example, there can be multiple vulcanization systems, defined, by way of example and not exhaustively, as conventional vulcanization (CV), semi-efficient vulcanization (Semi EV) and efficient vulcanization (EV). These systems, starting from the same polymeric base, give rise to a vulcanized product with different characteristics, for example with different prevalence of polysulfide, disulfide or monosulfide bonds.

It is known in fact that sulfur-cured rubbers have, depending on the vulcanization technique used, different proportions between the covalent C-C (carbon-carbon) and S-S (sulfur-sulfur) bonds and, in the context of the bonds of this second group, have different proportions between polysulfide, monosulfide and disulfide bonds. They also have different crosslink densities.

The vulcanization depends on the quantity of sulfur, the type of accelerator, the accelerator/sulfur ratio, the vulcanization time. A high accelerator/sulfur ratio and a longer vulcanization time result in the formation of a greater number of mono and disulfide bonds, compared to polysulfide bonds. The mono and disulfide bonds confer better resistance to heat and solvents, but are generally more rigid and have a lower tensile strength; polysulfide bonds, on the other hand, have better tensile strength, a better fracture resistance, but a lower chemical and thermal resistance.

It is evident that, in devulcanization reactions, this variability, especially in a product deriving from end-of-life tyres, generates a multiplicity of behaviours. The polysulfide bonds are more reactive and are the first to dissociate, aided by the temperature increase of the system. It is known in fact that a small fraction of devulcanization can be obtained with thermomechanical treatment alone, which affects the polysulfide bonds..

In the presence of rubbers with a prevalence of monosulfide bonds or in the presence of high crosslink densities, the use of a devulcanizing additive based on a single chemical species is often not effective. Polysulfide bonds, for example, are susceptible to nucleophilic attack by thiolate ions which, however, leave the mono and disulfide bonds intact. The use of more aggressive chemical species can, on the other hand, be excessive and cause the simultaneous breakage of too many bonds, losing selectivity. Furthermore, too many broken bonds tend, both radically and ionically, to react with each other, reorganizing themselves into a newly crosslinked structure, effectively nullifying the devulcanization and negatively lowering the average molecular weight of the product..

All the aspects previously indicated contribute to demonstrating that the current devulcanization methods, mechanical, mechano-thermal, chemical or mechano-chemical, are,
- not very selective towards an effective cleavage of the crosslink bonds alone
- partially ineffective in producing devulcanized products stable over time during storage and transportation, these products being exposed to the risk of migration of harmful residues;
- extremely dependent on the vulcanization methods, the grinding and the particle-size distribution of the starting product with respect to the constancy of the physical-mechanical properties of the final devulcanized product and of the mixture in which this devulcanized product is mixed with virgin elastomer and subjected to a subsequent second vulcanization.

With respect to the machinery and plants used in the known devulcanization methods, three categories of equipment can be mainly found: the first, simpler category comprises mills that chop, either by direct cutting such as blade mills, or by rubbing under pressure such as disc mills, or equipment with various and imaginative shapes, reminiscent of graters or squeezers. The second category is represented by batch systems, such as open and closed mixers; open mixers are commonly mixers with two counter-rotating steel rolls (Roll-Mill), with different absolute and relative rotation rates, with a span between the rolls ranging from zero to a few millimeters and an adjustable temperature of the rolls. Closed mixers are commonly of the "Bambury" type consisting of counter-rotating steel blades in an hourglass-shaped chamber. The third category is represented by continuous systems, commonly by extruders; the most common type of extruder in devulcanization processes is twin-screw, co-rotating or counter-rotating. Examples of prior documents are WO2020/169589A1, US4305850, WO01/29122A1, US9175155, US2017/362407A1, CN112458445A, DE3903825.

These documents exemplify synthesis methods of polymers by means of devulcanization, rubber devulcanization processes, acid-base adducts, functionalization methods of elastomeric material, but they do not solve the problems previously specified.

### Object of the present invention.

The present invention aims at overcoming the limits of the known devulcanization methods and defining a devulcanizing additive for vulcanized elastomers, in addition to a relative devulcanization method that overcome the drawbacks of the state of the art.

The present invention firstly relates to a devulcanizing additive for vulcanized elastomers in particular sulfur-vulcanized rubbers, consisting of
- an acid-base adduct obtained starting from a dicarboxylic organic acid having a number of carbon atoms ranging from 2 to 18 and from urea or mono-, di- or tri-substituted derivatives of urea having the following formula 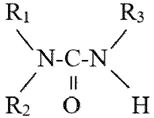 wherein R₁, R₂ and R₃, the same as or different from each other, can be hydrogen, linear alkyl chains having from 2 to 18 carbon atoms, preferably from 2 to 10;
- a peroxide, said peroxide being possibly mixed and absorbed on an inert inorganic filler, such as silicas, calcium carbonates, kaolins, aluminum silicates and clays, preferably absorbed on silica, calcium carbonate, aluminum silicates, kaolin or relative mixtures, more preferably on silica, calcium carbonate or relative mixtures; and
- possibly, a compatibilizer selected from ethylene-vinyl acetate copolymer, zinc dimethylacrylate, NR-g-PDMMMP (grafted copolymer of natural rubber (NR) and poly(dimethyl(methacryloyloxymethyl)phosphonate (PDMMMP)), liquid butadiene-isoprene copolymer rubber, GMA & MAH (grafted polyolefin polymers), epoxidized natural rubber, trans-polyoctenamer (TOR) and mixtures thereof,
wherein the acid-base adduct is obtained starting from organic dicarboxylic acid and urea or mono, di or trisubstituted derivatives of urea, in a molar ratio ranging from 1:1 to 1:2.

The present invention further relates to a method for the devulcanization of sulfur-vulcanized rubbers, batchwise, which comprises the following steps:
i) mixing the devulcanizing additive consisting of
   an acid-base adduct obtained starting from a dicarboxylic organic acid having a number of carbon atoms ranging from 2 to 18 and from urea or mono-, di- or tri-substituted derivative of urea having the following formula 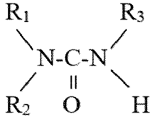
   wherein R₁, R₂ and R₃, the same as or different from each other, can be hydrogen, linear alkyl chains having from 2 to 18 carbon atoms, and
   a peroxide, said peroxide being possibly mixed and absorbed on an inert inorganic filler, such as silicas, calcium carbonates, kaolins, aluminum silicates and clays, preferably absorbed on silica, calcium carbonate, aluminum silicates, kaolin or relative mixtures, more preferably on silica, calcium carbonate or relative mixtures;
   with the vulcanized elastomer to be devulcanized;
   the acid base adduct being obtained starting from the dicarboxylic organic acid and from urea or the derivatives of mono-, di- or tri-substituted urea, in a molar ratio ranging from 1:1 to 1:2;
   with the possible addition of a compatibilizer selected from ethylene-vinyl acetate copolymer, zinc dimethylacrylate, NR-g-PDMMMP (grafted copolymer of natural rubber (NR) and poly(dimethyl(methacryloyloxymethyl)phosphonate (PDMMMP)), liquid butadiene-isoprene copolymer rubber, GMA & MAH (grafted polyolefin polymers), epoxidized natural rubber, trans-polyoctenamer (TOR) and mixtures thereof;
   when the devulcanizing additive consists of adduct and peroxide, said additive being added in a quantity ranging from 0.5 to 5% by weight with respect to the weight of the elastomer to be devulcanized, the adduct being added in a quantity ranging from 0.4 to 4.5% by weight and the peroxide being added in a quantity ranging from 0.1 to 3% by weight with respect to the weight of the elastomer to be devulcanized;
   when the devulcanizing additive consists of adduct, peroxide and compatibilizer, said additive being added in a quantity ranging from 1 to 20% by weight with respect to the weight of the elastomer to be devulcanized, the adduct being added in a quantity ranging from 0.5 to 4.5% by weight, the peroxide being added in a quantity ranging from 0.1 to 3% by weight and the compatibilizer being added in a quantity ranging from 0.4 to 19.4% by weight with respect to the weight of the elastomer to be devulcanized;
iii) optional heating of the mixture thus obtained, preferably to a temperature ranging from 20 to 80°C;
iv) compression and mechanical stretching, in particular in an open or closed mixer;
v) repetition of the compression and mechanical stretching step iv) for a number of times ranging from 0 to 40.

Steps iv) and v) are preferably carried out by controlling the temperature which ranges from 20 to 110°C:
The present invention further relates to a method for the devulcanization of sulfur-vulcanized rubbers, in continuous, which comprises the following steps:
i) mixing the devulcanizing additive consisting of
   an acid-base adduct obtained starting from a dicarboxylic organic acid having a number of carbon atoms ranging from 2 to 18 and from urea or mono-, di- or tri-substituted derivatives of urea having the following formula 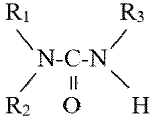
   wherein R₁, R₂ and R₃, the same as or different from each other, can be hydrogen, linear alkyl chains having from 2 to 18 carbon atoms, and a peroxide, said peroxide being possibly mixed and absorbed on an inert inorganic filler, such as silicas, calcium carbonates, kaolins, aluminum silicates and clays, preferably absorbed on silica, calcium carbonate, aluminum silicates, kaolin or relative mixtures, more preferably on silica, calcium carbonate or relative mixtures;
   with the vulcanized elastomer to be devulcanized;
   the acid base adduct being obtained starting from the dicarboxylic organic acid and from urea or the derivatives of mono-, di- or tri-substituted urea, in a molar ratio ranging from 1:1 to 1:2;
   with the possible addition of a compatibilizer selected from ethylene-vinyl acetate copolymer, zinc dimethylacrylate, NR-g-PDMMMP (grafted copolymer of natural rubber (NR) and poly(dimethyl(methacryloyloxymethyl)phosphonate (PDMMMP)), liquid butadiene-isoprene copolymer rubber, GMA & MAH (grafted polyolefin polymers), epoxidized natural rubber, trans-polyoctenamer (TOR) and mixtures thereof;
   when the devulcanizing additive consists of adduct and peroxide, said additive being added in a quantity ranging from 0.5 to 5% by weight with respect to the weight of the elastomer to be devulcanized, the adduct being added in a quantity ranging from 0.4 to 4.5% by weight and the peroxide being added in a quantity ranging from 0.1 to 3% by weight with respect to the weight of the elastomer to be devulcanized;
   when the devulcanizing additive consists of adduct, peroxide and compatibilizer, said additive being added in a quantity ranging from 1 to 20% by weight with respect to the weight of the elastomer to be devulcanized, the adduct being added in a quantity ranging from 0.5 to 4.5% by weight, the peroxide being added in a quantity ranging from 0.1 to 3% by weight and the compatibilizer being added in a quantity ranging from 0.4 to 19.4% by weight with respect to the weight of the elastomer to be devulcanized;
iii) optional heating of the mixture thus obtained, preferably to a temperature ranging from 20 to 80°C;
iv) extrusion of the devulcanized product.

The present invention finally relates to a devulcanized product that can be obtained with the method according to the present invention, suitable for being used as a raw material in blends with virgin elastomers to obtain revulcanized elastomers, particularly sulfur-vulcanized rubbers, in a percentage ranging from 5% to 100%, preferably from 20% to 60%, by weight with respect to the weight of the blend.

The devulcanizing additive for vulcanized elastomers is particularly effective in the case of sulfur-vulcanized rubbers.

The acid-base adduct is obtained starting from an organic monocarboxylic or dicarboxylic acid having a number of carbon atoms ranging from 2 to 18 and from urea or mono, di or trisubstituted derivatives of urea, in a molar ratio ranging from 1:1 to 1:2, preferably equal to 1:2.

This devulcanizing additive is a solid, preferably in the form of a powder.

The acid-base adduct is obtained by precipitation in solution, or by reaction between solids closely mixed in the presence of humidity, of organic mono or dicarboxylic acid, with urea or mono, di or trisubstituted derivatives of urea.

The organic dicarboxylic acid having a number of carbon atoms ranging from 2 to 18, preferably from 2 to 10, is more preferably selected from oxalic acid, tartaric acid, malic acid, and is even more preferably oxalic acid.

The base is urea or mono, di or trisubstituted derivatives of urea having the following formula 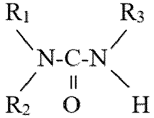 wherein R₁, R₂ and R₃, the same as or different from each other, can be hydrogen, linear alkyl chains having from 2 to 18 carbon atoms, preferably from 2 to 10, the base is preferably urea.

The acid-base adduct is even more preferably an oxalic acid-urea adduct in a molar ratio of 1:2.

The peroxide can be an organic or inorganic peroxide, and is preferably an organic peroxide.

The organic peroxide is preferably selected from dicumyl peroxide, 1,3-1,4-bis(tert-butylperoxyisopropyl)benzene, 2,5-dimethyl-2,5-di(tert-butyl-peroxy)hexane, Tert-butylcumyl peroxide, 2,5-dimethyl-2,5-di(tertbutylperoxy)hex-3-ine, n-butyl-4,4-di(tert-butylperoxy)valeriate, 1,1-di(tert-butylperoxy)-3,3,5-trimethylcyclohexane, di(2,4-dichloro-benzoyl) peroxide, and mixtures thereof.

The organic peroxide is preferably selected from dicumyl peroxide and 1,1-di(tert-butylperoxy)-3,3,5-trimethylcyclohexane, and is even more preferably dicumyl peroxide.

The organic peroxide is preferably mixed and absorbed on an inert inorganic filler, such as, for example, silicas, calcium carbonates, kaolins, aluminum silicates and clays, more preferably absorbed on silica, calcium carbonate, aluminum silicates, kaolin or relative mixtures, even more preferably on silica, calcium carbonate or relative mixtures.

The preferred organic peroxide is dicumyl peroxide absorbed on calcium carbonate and silica. This formulation of the peroxide makes storage, processing and dosage easier.

It is interesting to note that peroxides, also commonly used as vulcanizing agents, represent a valid co-reagent for the devulcanization process, proving to be synergistic for obtaining a selective breakage of the intermolecular bonds, and for the subsequent stabilization of the chain ends, thus preventing revulcanization.

In order to prevent an excessively rapid reaction kinetics and a predominantly surface reaction on the external part of the vulcanized elastomer particle, it is also possible to use organic peroxides with scorch protection. These are organic peroxides mixed with suitable agents that delay the availability of the peroxidic radicals in the reaction, favouring a more homogeneous reaction. Examples of these suitable agents are nitroxides and their derivatives (US7829634). Other possible agents are hydroquinones and their derivatives, mixed with sulfur donors and coagents such as monofunctional vinyl monomers, monofunctional allyl monomers, polyfunctional vinyl monomers, polyfunctional allyl monomers and mixtures thereof (US5849214).

In the case of commercial peroxides, this scorch protection has already been closely integrated in the peroxide by the manufacturer: an example of these peroxides is the commercial peroxides Luperox SP Scorch Protection marketed by Arkema.

Also in the case of peroxides with scorch protection, the peroxide absorbed on an inert inorganic filler selected from silica, calcium carbonate and relative mixtures is preferred.

The peroxide is preferably in granular or powder form and can also be burnt on a polymeric carrier.

The devulcanizing additive according to the present invention can also comprise a compatibilizer selected from ethylene-vinyl acetate copolymer, zinc dimethyl acrylate, NR-g-PDMMMP (grafted copolymer of natural rubber (NR) and poly(dimethyl (methacryloxymethyl) phosphonate (PDMMMP)) , butadiene-isoprene liquid copolymer rubber, GMA & MAH (grafted polyolefin polymers), epoxidized natural rubber, trans-polyoctenamer (TOR) and mixtures thereof.

The compatibilizer is preferably trans-polyoctenamer (TOR). The trans-polyoctenamer (TOR) is even more preferably a pure powder or granulate. The powder form has proved to be particularly suitable for the purpose, for ease of dosage, mixing and uniformity of the result.

The compatibilizer allows the behaviour in the blend of the not completely devulcanized particles to be improved. This compatibilizer has the property of having a low melting point and a viscosity which is such as to effectively penetrate the porosities of the not completely devulcanized particles, forming an interface film, with a thickness ranging from a few microns to a few hundred microns, towards the blend. The particular chemical structure of the compatibilizer is very similar to the new blends and can also have reactive sites in the new vulcanization reaction of the blend consisting of the devulcanized product, possibly mixed with virgin elastomer, effectively integrating the not completely devulcanized particle in the network.

The devulcanizing additive according to the present invention can be prepared before being added to the elastomer to be devulcanized and then mixed with the elastomer powder to be devulcanized or the different components of the devulcanizing additive can be mixed directly with the elastomer to be devulcanized simultaneously or in subsequent stages.

The compatibilizer can be added for example both in a single step with the acid-base adduct and the peroxide, and in a subsequent step, on the already devulcanized product, also acting as a viscosity regulator.

This mechanism allows an improvement of the mechanical rheological properties of the devulcanized product compared to the product without compatibilizer.

There is also an improvement in the aesthetics of the finished devulcanized product, which is smoother and more uniform, free from surface imperfections, caused by the non-devulcanized particles that emerge from the surface.

The use of compatibilizers on ground products deriving from end-of-life tyres (Ground Tyre Rubber or GTR) is known from the state of the art, but the use in combination with a devulcanizing additive, particularly a devulcanizing additive based on an acid-base adduct and a peroxide is entirely new.

When the devulcanizing additive comprises adduct and peroxide, it is added in a quantity ranging from 0.5 to 5% by weight with respect to the weight of the elastomer to be devulcanized, wherein the adduct is added in a quantity ranging from 0,4 to 4.5% by weight and the peroxide is added in a quantity ranging from 0.1 to 3% by weight with respect to the weight of the elastomer to be devulcanized.

When the devulcanizing additive comprises adduct, peroxide and compatibilizer, it is added in a quantity ranging from 1 to 20% by weight with respect to the weight of the elastomer to be devulcanized, wherein the adduct is added in a quantity ranging from 0.5 to 4.5% by weight, the peroxide is added in a quantity ranging from 0.1 to 3% by weight and the compatibilizer is added in a quantity ranging from 0.4 to 19.4% by weight with respect to the weight of the elastomer to be devulcanized.

Thanks to the simultaneous use of at least the acid-base adduct and the peroxide, and possibly the compatibilizer, the devulcanizing additive according to the present invention allows a better management of the devulcanization of all the different sulfur-crosslinked rubbers, which can be present in products deriving from post-consumption or from processing waste, such as ELTs or waste from the processing of footwear soles.

The use of the compatibilizer, as already mentioned, also allows the behaviour in the blend of the non-devulcanized residues to be optimized, incorporating them and covering them with a reactive functional interface that compatibilizes them in an effective and chemically active way in the subsequent revulcanizations, regardless of the composition and initial vulcanization mode.

An apparatus for devulcanization is also described, comprising a mixing and heating device and a reaction device.

In said devulcanization equipment, the mixing and heating device is selected from a fast mixer (turbomixer) or a hot-air or infrared or microwave device.

In this mixing and heating device, the vulcanized elastomer to be devulcanized is preheated and mixed with the devulcanizing additive according to the present invention, before the devulcanization treatment, without the starting of the devulcanization, to then be devulcanized in the reaction device.

In said devulcanization equipment, the reaction device can be a single- or multiple-step roll-mill, a co-rotating twin-screw extruder with a screw profile suitable for keeping the temperature as much as possible below the depolymerization value of the elastomer, a counter-rotating twin-screw extruder with a screw profile suitable for keeping the temperature as much as possible below the elastomer depolymerization value, a multi-screw extruder (ring extruder or planetary extruder), intrinsically suitable for keeping the temperature below the elastomer depolymerization value, a single-screw extruder suitable for keeping the temperature below the elastomer depolymerization value, preferably a roll-mill, single- or multiple-step, or a multi-screw extruder (ring extruder or planetary extruder).

In particular, the screw profile has a predominant part of transporting elements with respect to the mixing and grinding elements which, due to the high mechanical stress, mainly contribute to the temperature increase of the material. The number of inverse elements that contribute to increasing the pressure of the melt and preparing a depression area suitable for the insertion of an atmospheric or vacuum degasser, is also suitably dosed and positioned for inducing non-excessive mechanical stress on the melt and such as to exceed the degradation temperatures of the elastomer.

If necessary, the compatibilizer can be added both in the initial mixing, i.e. in the mixing device, or more effectively, to the melt, by means of an appropriate side extruder provided in the reaction device.

The invention will also appear more evident from the attached figures, in which:
figure 1 shows the devulcanization degree for the devulcanized products obtained in the following examples 1, 2, 4, 5 and 6, measured according to the standard ASTM D6814;
figure 2 shows the analysis of the Horikx diagram for the devulcanized products obtained in the following examples 1, 2, 4, 5 and 6;
figure 3 shows a multi-screw extruder, planetary extruder or Ring-Extruder, with 12 co-rotating screws;
figure 4 shows a schematic sectional view of the multi-screw extruder to demonstrate that the cooling is effective both inside and outside the planetary arrangement of the screws;
figure 5 shows that the "elongational flow" values of a multi-screw extruder are higher than those of a normal twin-screw extruder;
figure 6 is a table showing the physical-mechanical properties measured for a technical article (example "Bushing"), subjected to testing;
figure 7 is a table showing the physical-mechanical properties measured for the Tyre, truck tread - Premium Truck Tyre, subjected to testing;
figure 8 shows a visual comparison of the "raw" product, i.e. between the appearance of the product of the state of the art and the appearance of the product according to the present invention, wherein the devulcanized product has been added at 10% by weight "on top" on a base blend for a technical article (Bushing), also comprising vulcanizing and accelerating products, the blend was then processed and photographed before vulcanization;
figure 9 shows a visual comparison of the "cured" product, i.e. between the appearance of a state-of-the-art product and the appearance of a product according to the present invention, obtained according to the method indicated for figure 8, starting from a base blend for truck tread - Premium Truck Tyre and wherein the product was photographed after vulcanization;
figure 10 is a table showing the physical-mechanical properties measured for the tyre, car tread - Passenger Tyre, tested.

By way of non-limiting example of the present invention, some representative examples of the present invention are provided hereunder.

In the following examples 1-3, an ELT powder was used with the following characteristics, deriving from thermogravimetric analysis (TGA):

| % | Value |
|---|---|
| NR | 37% |
| SBR | 22% |
| Carbon Black | 26% |
| White fillers | 9% |
| Volatile products | 5% |

### Example 1

An example of devulcanization, with a batch plant with a roll-mill, was carried out with the devulcanizing additive according to the present invention as follows.

100 kg of ELT powder, deriving from truck tread, with a particle size ranging from 0.05 mm to 3 mm, mainly equal to 0.8 mm, were weighed.

3% by weight of oxalic acid-urea adduct was added to the powder in a molar ratio of 1:2 and 0.25% by weight of dicumyl peroxide at 40%, adsorbed on a mixture of silica and calcium carbonate.

The mixture thus obtained was homogenized for 5 minutes and brought to the surface temperature (measured by means of an infrared thermometer) of 70°C, by means of a high-speed turbomixer, with a mixing tool profile and a number of blades suitable for transferring quantities of motion to the mixture in order to form a correct mixing "cone" and at the same time transfer sufficient energy for a constant temperature increase in the times established.

A mixing tool suitable for the purpose has from one to 4 mixing steps, in the case of the present example three mixing steps, with a blunt or rounded blade profile to allow adequate fluidization of the material.

The temperature is a parameter that can be subject to interpretation errors: the rubber in fact undergoes heating due to mechanical action and its temperature, measured with an infrared thermometer, drops extremely rapidly over time. For this reason, positioning the infrared probe too far downstream from the rolls can result in a significantly lower temperature measurement. The product becomes lukewarm in a very short time, so much so that it mistakenly induces the impression of a low-temperature process.

The mixture thus homogenized and heated, was passed for 6 minutes in a roll-mill, with a relative speed of 1:1.2, the span between the rolls set to the minimum (virtually zero, compatibly with the grinding of the rolls), and appropriate thermostat-regulaton of the rolls, said rolls being kept at a temperature below 35°C. More specifcially, the span between the rolls is 0.1 mm.

2% by weight of TOR in powder form was added to the mixture thus processed, distributing it homogeneously over the mass of the mixture.

The mixture was again processed in the roll-mill for a further 4 minutes, until complete melting and incorporation of the compatibilizer within the mixture.

The mixture was then discharged and sent for packaging, then proceeding with a new processing batch.

The preheating temperature, the number of steps in the mixer, the times, the rotation rate and the relative speed of the rolls, as well as the percentages of modifiers and compatibilizers, the operating temperatures, can vary according to the type of powder, which must be previously analyzed to define the best process conditions.

### Example 2

A second example of devulcanization with the devulcanizing additive according to the present invention was carried out following exactly the same method as Example 1 with the difference that the peroxide used is a dicumyl peroxide with a scorch protection system (Luperox with Scorch Protection SP2, marketed by Arkema).

### Example 3

A third example of devulcanization with the devulcanizing additive according to the present invention was carried out following exactly the same method as Example 1 with the difference that the material to be devulcanized is a SBR (styrene-butadiene Rubber) resulting from the grinding of waste processing of the footwear industry, particularly shoe soles, and destined for re-use in the same application: 100 kg of SBR rubber powder were then weighed, with a particles size ranging from 0.5 mm to 3 mm, mainly equal to 1, 2 mm.

### Example 4

A fourth example of devulcanization with the devulcanizing additive according to the present invention was carried out as follows.

100 kg of ELT powder, deriving from truck tread, of a production batch different from the previous examples and not previously analyzed, with a particle size ranging from 0.5 mm to 3 mm, mainly equal to 1.2 mm, were weighed.

3.5% by weight of oxalic acid-urea adduct in a molar ratio of 1:2 and 0.30% by weight of dicumyl peroxide at 40%, adsorbed on a mixture of silica and calcium carbonate was added to the powder.

The mixture thus obtained was homogenized in a low-speed horizontal mixer for 8 minutes, under cold conditions.

The mixture thus homogenized was passed 25 times in a roll-mill, the span between the rolls being equal to 0.2 mm to adapt to the greater particle size of the product, whereas the speed ratio was brought to 1:1.3, to increase the stretching of the product. An appropriate thermostat-regulaton of the rolls was always maintained, keeping said rolls at a temperature below 35°C.

This process took 12 minutes to reach a temperature of 95°C, measured on the rubber with an infrared thermometer.

The mixture was then discharged and sent for packaging, then proceeding with a new processing batch.

In this example, the mixture, due to its characteristics, was processed with a greater number of steps and did not require the use of a compatibilizer or preheating; in this case it was therefore possible to homogenize the components under cold conditions in a horizontal mixer, with a slow-rotating internal mixing reel and directly process the mixture thus obtained in a roll-mill. In particolar the horizontal mixer is a ribbon blender.

### Example 5

A further example of devulcanization with the devulcanizing additive according to the present invention was carried out using the same method as in Example 4, with the difference that the peroxide used is an inorganic peroxide.

3.5% by weight of oxalic acid-urea adduct in a molar ratio of 1:2 and 0.15% by weight of potassium peroxymonosulfate, in the form of a granular powder as a triple salt, called Oxone, were added to the ELT powder, not previously analyzed, with a particle size ranging from 0.5 mm to 3 mm, mainly equal to 1.2 mm..

Also in this case it was not necessary to use the compatibilizer, or preheating.

### Example 6

A sixth example of devulcanization with the devulcanizing additive according to the present invention was carried out as follows.

100 kg of Rubber Buffing, deriving from an end-of-life tyre, with a particle size ranging from 0.5 mm to 10 mm, very irregular, were weighed: this is a product deriving from the coarse grinding of the tyre tread. This product, called Rubber Buffing, derives directly from buffing, and has a very irregular, elongated, frayed shape with dimensions of even a few centimeters.

3 phr (parts per 100 parts of rubber) of oxalic acid-urea adduct in a molar ratio of 1:2 and 2.5 phr of 1,1-di(tert-butylperoxy)-3,3,5-trimethylcyclohexane at 40%, adsorbed on a mixture of calcium carbonate and sodium aluminum silicate, were added to the Rubber Buffing.

The mixture thus obtained was homogenized in a low-speed horizontal mixer for 8 minutes, under cold conditions.

The homogenized mixture was passed 20 times in a roll-mill, the span between the rolls having been set at 0.1 mm, whereas the speed ratio was set at 1:1.5. An adequate thermostat-regulation of the rolls was always maintained, by means of a heating/cooling unit or by means of a refrigerator alone, keeping the temperature of said rolls below 40°C.

The speed of the rollers was set at 80 RPM and the processing was continued until the buffing form had dissolved and the classic "flaky" form had been produced, which is obtained by devulcanization.

The mixture was then discharged and sent for packaging, then proceeding with a new processing batch.

### Example 7

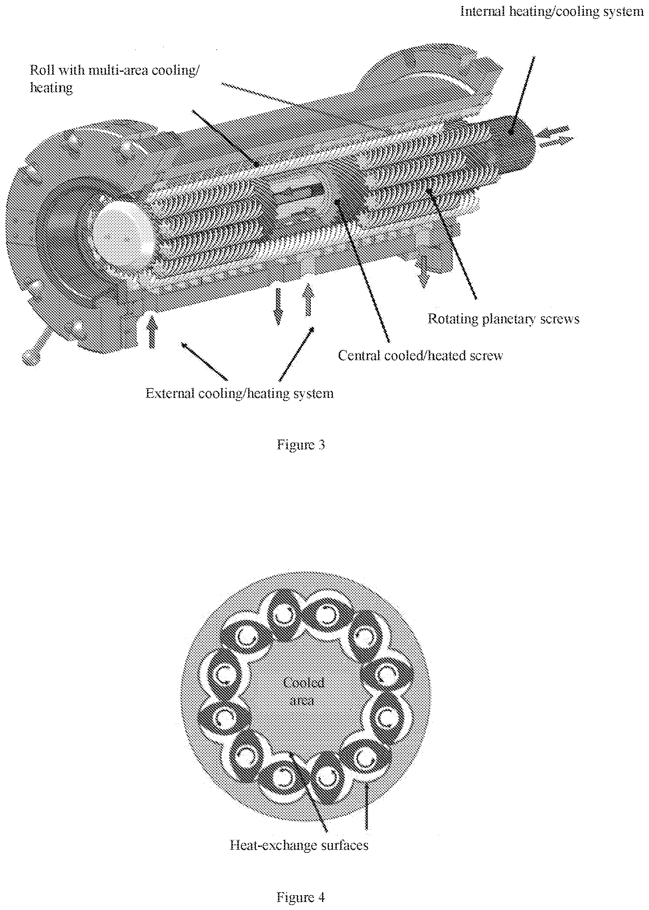

A further example was carried out with the same recipe as in Example 4, with the difference that the mixture was processed using a multi-screw extruder, planetary extruder or Ring-Extruder, with 12 co-rotating screws (shown in figure 3), with a profile suitable for the purpose. The particolar feature of this extruder is to allow optimal temperature control to avoid depolymerization phenomena, thanks to the high contact area with the cooled parts of the roll. The cooling is also effective both outside and inside the planetary arrangement of the screws (figure 4).

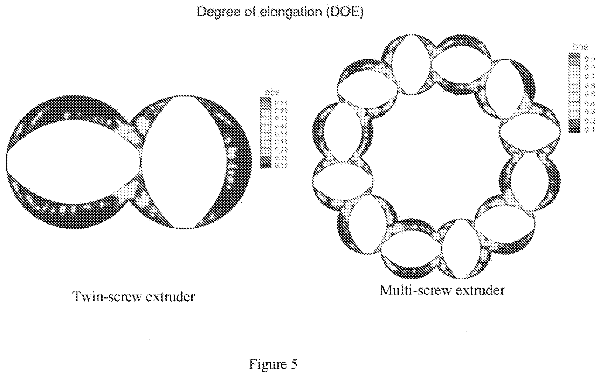

This extruder has proved to be particularly suitable for the devulcanization reaction, due to the property of optimal thermal control. The screw profile used basically provides for a large preponderance of conveyance elements and a reduced quantity of mixing elements concentrated in the final part, responsible for the greater mechanical stress and increase in temperature. Although speeds and pressures are similar to normal extrusion processes, the particular geometry of the ring extruder itself has a greater intermeshing area, thus achieving better mixing while keeping the temperature low. Furthermore, this extruder allows much higher "elongational flow" values (figure 5) to be obtained compared to a normal twin-screw extruder, values even 50% higher. This allows a greater number of compression and decompression movements of the rubber, similar to what takes place in roll-mills; this kind of mechanical stress has proved to be extraordinarily effective for the highly selective devulcanization process.

The use of these extruders for the preparation of rubber blends, wherein this particular temperature management is exploited, is known from the state of the art (DE102015120586); the use for devulcanization is, on the contrary, innovative.

200 kg of ELT powder, deriving from truck tread, with a particle size ranging from 0.5 mm to 3 mm, mainly equal to 1.2 mm, were weighed.

2.5% by weight of oxalic acid-urea adduct in a molar ratio of 1:2 and 0.25% by weight of 40% dicumyl peroxide, adsorbed on a mixture of silica and calcium carbonate, were added to the powder..

The mixture thus obtained was homogenized in a turbomixer for a time of 2 minutes, without a significant increase in temperature, reaching 40°C.

The homogenized mixture was extruded with a multi-screw extruder, also called Ring-Extruder or planetary extruder, always keeping the temperature below the polymer depolymerization temperature. The operating temperature was kept at a value ranging from 100 to 150°C according to the areas, the screw revolutions equal to 600 RPM, whereas the diameter of the screws was 30 mm, with an LID ratio of 55. The productivity was 350 kg per hour.

The particular conformation of this equipment allowed an optimal management of the process. The extruded mixture was then sent for packaging.

As clearly explained, this particular extruder, unlike other types, allows efficient processing, resulting in optimal temperature control with the same stress applied, an excellent productivity and, if necessary, effective degassing.

### Example 8

This example was carried out with the same recipe as Example 7, with the difference that the mixture was processed by means of a co-rotating twin-screw extruder, having a special profile of the screws, suitable for the purpose: this is in particular an increased number of conveyance screw elements and a balanced number of grinding and mixing elements, such as to effectively control the excessive temperature increase.

The process temperature was kept at values ranging from 80 to 270°C depending on the areas, with a vacuum degassing at -850 mbars, and a pressure of 7 bars. The extruder had a screw diameter of 35 mm, with an LID ratio of 48 and screw revolutions equal to about 300 RPM; the productivity was equal to about 50 kg per hour.

The presence of an adequate number of elements with an inverse profile allowed a correct management of the melt pressures and allowed a vacuum degasser to be inserted for an effective removal of the gases. It was possible to arrange the final degassing, before the supply chain, in a particularly efficient way.

### Result analysis.

The devulcanized products obtained at the end of Examples 1-8 were analyzed and are characterized by devulcanization degrees ranging from 74% to 45%, with percentage increases ranging from + 80% to + 32% with respect to the product treated with the oxalic acid-urea adduct alone in a molar ratio of 1:2.

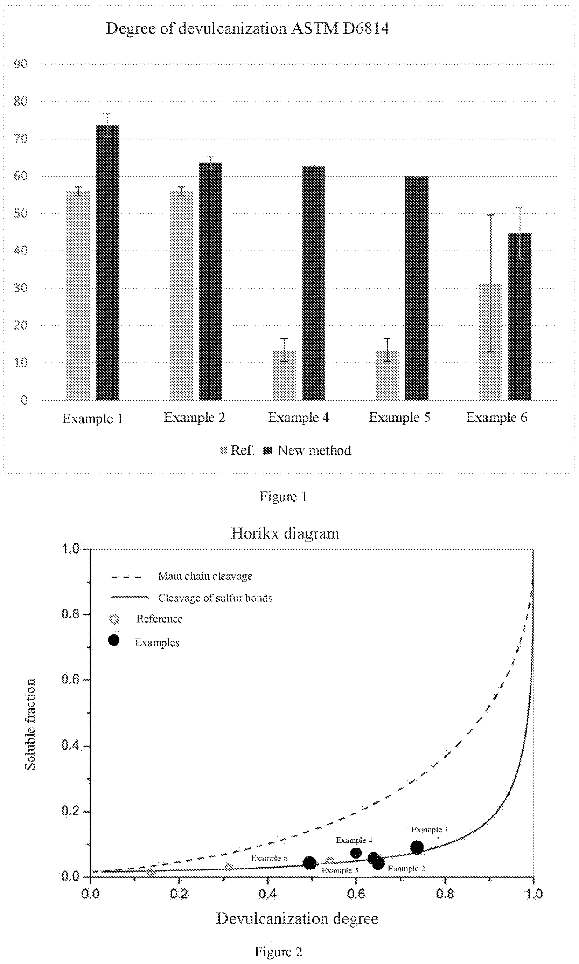

In particular, the devulcanization degree measured for the product treated with the oxalic acid-urea adduct alone in a molar ratio of 1:2 was equal to 56% ± 1, whereas the devulcanization degree of the product obtained according to Example 1 was equal to 74% ± 3, with an increase of +32%, (see figure 1) demonstrating the considerable improvement, in terms of devulcanization efficacy, obtained with the devulcanizing additive according to the present invention compared to the state of the art.

In Example 2, the devulcanization degree measured for the product treated with the oxalic acid-urea adduct alone in a molar ratio of 1:2 was equal to 56% ± 1, whereas the devulcanization degree of the product obtained according to Example 2 was equal to 64% ± 1, with an improvement of + 14%.

In Example 3, the devulcanization degree was not measured, but the processability in the blend and the performances obtained in the production of new shoe soles from which the scraps derived,was measured. The processability of the mixture treated with the devulcanizing additive according to the present invention was found to be optimal, resulting in a percentage of re-use in new blends up to 66% higher than in the state of the art.

In Example 4, the devulcanization degree measured for the product treated with the oxalic acid-urea adduct alone, at low temperature, in a molar ratio of 1:2, was equal to 13% ± 3, whereas the devulcanization degree of the product obtained according to Example 4 was equal to 63%, with a substantial improvement.

In Example 5, the devulcanization degree with the oxalic acid-urea adduct alone, at low temperature, in a molar ratio of 1:2 was equal to 13% ± 3, as in Example 4; whereas the devulcanization degree of the product according to Example 5 was equal to 60%, with a substantial improvement, and also demonstrating the effectiveness and possibility of also using inorganic peroxides for the purposes of the present invention.

In Example 6, the devulcanization degree measured for the product treated with the oxalic acid-urea adduct alone in a molar ratio of 1:2 was equal to 31% ± 18, wherein the wide variability of the result is a consequence of the non-uniform particle size of the Buffing, whereas the devulcanization degree of the product obtained according to Example 6 5 was equal to 45% ± 7, with an improvement of +45% in the example in question, both for the devulcanization degree, but also for a lesser variability of the result with the same Buffing particle size.

The results of Examples 7 and 8 in multi-screw and twin-screw extrusion confirm the improvements of the previous examples effected in roll-mills. In order to take into account the different processing methods, which have greater temperature variations and a greater fraction of volatile gases extracted through degassing, the devulcanization degree was not evaluated, but rather the behaviour in the blend, which results in a percentage of re-use, in new blends, up to 50% higher than in the state of the art.

The analysis of the Horikx diagram (see figure 2) also indicates an extremely selective devulcanization with respect to the sulfur bonds, both polysulfide, mono- and di-sulfide, preserving the Carbon-Carbon bonds of the molecular chain from breakage and thus preserving the molecular weight of the elastomer.

It can therefore be concluded that the devulcanizing additive according to the present invention allows a devulcanized product to be obtained, characterized by a high degree of devulcanization compared to the prior art and at the same time a homogeneous and high-quality devulcanization.

In the present patent application, base blend refers to the blend produced with only elastomers and virgin polymers, fillers, additives and the package of specific vulcanizing products.

In the present patent application, final blend refers to the base blend to which a certain quantity of devulcanized product, according to the present invention, has been added.

As previously indicated, the devulcanized product thus obtained can be mixed with a base blend, i.e. a blend with elastomers and virgin polymers, including additives, fillers, vulcanizers and accelerators, said devulcanized product being added in quantities ranging from 10% to 90% % by weight, intended as a percentage by weight with respect to the weight of the final blend.

Said final blend, once vulcanized, has mechanical and chemical properties very similar to those of the respective starting base blend, devoid of devulcanized product, i.e. produced only with elastomers and virgin polymers, additives, fillers, vulcanizers and accelerators, demonstrating that the devulcanized product according to the present invention is effectively devulcanized and allows a final blend to be obtained which behaves very similarly to a blend produced with only first-rate virgin components.

After carrying out the analysis of the results according to the standard ASTM D6814-02 and with the Horikx diagram through which the devulcanization degree and the selectivity degree of the devulcanization were measured, a test campaign was then effected for verifying the physical-mechanical properties in the final blend of the devulcanized products object of the present invention, wherein the devulcanized product according to the present invention is used for replacing elastomers and virgin polymers, in percentages that depend on the application sector for which the final blend is intended.

It is not significant, nor at times possible, in fact, to test the physical-mechanical properties of the devulcanized rubber/product as such, according to the present invention: these properties must in fact be tested on specimens obtained starting from a non-vulcanized blend in which the devulcanized rubber is added in percentages ranging from 5% to 90% by weight (more commonly from 10% to 30% by weight) with respect to the total weight of the final compound, adding the fillers and package of specific vulcanizing products, and then vulcanizing the whole mixture: specimens are then obtained from the final vulcanized and moulded blend, on which the physical-mechanical properties are measured, which are then compared with the corresponding properties of specimens similarly obtained from the corresponding base blend, without devulcanized rubber.

The physical-mechanical properties of devulcanized rubber are therefore more significant when tested in specific final blends for the various application sectors, wherein the devulcanized rubber is added in variable percentages depending on the criticality of the application. In a tyre, for example, it is preferable to limit the quantity of devulcanized product present in the blend within the range of 10% to 30% by weight with respect to the weight of the final blend, whereas in footwear that has less stringent technical requirements, it is possible to use a quantity of devulcanized product in the blend ranging from 50% to 80% by weight with respect to the weight of the final blend.

More specifically, the use of a devulcanized rubber from ELTs according to the present invention was tested in blends for the following application sectors:
- Technical article (example of "Bushing", bushes for the automobile sector),
- Tyre, truck tread (example of Premium Truck Tyre),
- Tyre, car tread (example of Passenger Tyre).

The use of recycled rubber from processing scraps, devulcanized according to the present invention, was also tested in the sector of:
- Footwear (example of a shoe sole).

The devulcanized rubber was added in quantities ranging from 10% to 50% by weight with respect to the total weight of the final blend depending on the application.

The final blends used in the various application sectors are very different in chemical composition, mixing and vulcanization methods, and the addition of the devulcanized rubber according to the present invention allows an optimal re-use of the same, with different effects depending on the type of blend.

The base blends, produced with only elastomers and virgin polymers, fillers, additives and the package of vulcanizing products specific for the various application sectors, can be exemplified as indicated in the following tables:

### Base blend for a technical article being tested ("Bushing")

| **Material** | **Phr (parts per 100 parts of rubber)** |
|---|---|
| Natural rubber (NR) | 100 |
| Carbon black FEF N550 | 55 |
| Oils, plasticizers, antioxidants | 9 |
| Zinc oxide | 5 |
| Sulfur and accelerators | 3 |

### Base blend for truck tyres - Premium Truck Tyre - subjected to testing:

| **Material** | **Phr (parts per 100 parts of rubber)** |
|---|---|
| Natural rubber (NR) | 70 |
| High-CIS polybutadiene rubber (BR) | 30 |
| Carbon black SAF N220 | 50 |
| Oils, plasticizers, antioxidants | 5 |
| Zinc oxide | 3 |
| Sulfur and accelerators | 3 |

### Basic blend for car tyres - Passenger Tyre - subjected to testing:

| **Material** | **Phr (parts per 100 parts of rubber)** |
|---|---|
| Styrene Butadiene Rubber Solution (S-SBR, oil extended 37.5 phr) | 96.25 |
| High-CIS polybutadiene rubber (BR) | 30 |
| Silica/TESPT | 70/7 |
| Carbon black SAF N220 | 15 |
| Oils, plasticizers, antioxidants | 15 |
| Zinc oxide | 3 |
| Sulfur and accelerators | 4 |

### Base blend for footwear (Shoe sole) subjected to testing

| **Material** | **Phr (parts per 100 parts of rubber)** |
|---|---|
| Natural rubber (NR) | 40 |
| Styrene Butadiene Emulsion Rubber Rubber (E-SBR) | 40 |
| High-CIS polybutadiene rubber (BR) | 20 |
| White fillers | 70 |
| Oils, plasticizers, antioxidants | 28 |
| Zinc oxide | 3 |
| Sulfur and accelerators | 5 |

The base blends (without devulcanized product/rubber) indicated in the previous tables represent standard blend recipes for the verification of the physical-mechanical tests in the blend; many producers of rubber blends use other products or additives or components, often reserved, and in varying concentrations compared to the examples. It should be noted however that these differences produce results in line with those specified in the present description.

Base blends (without devulcanized product/rubber as reference) were therefore created for each application sector; furthermore, as a comparison, blends containing different quantities of a devulcanized product obtained with the oxalic acid-urea adduct *(*"*Urea-oxalic acid*" Blends) were produced, and finally blends containing different quantities of the devulcanized product according to the present invention, i.e. obtained with the devulcanizing agent according to the present invention ( "*This Patent*" Blends).

The improvements in the mechanical characteristics have been indicated as a percentage, normalizing the result obtained for the base blend to 100.

The physical-mechanical properties indicated were selected by identifying those most significant for the specific reference sector.

The Standard methods used for the measurements of these properties indicated in the attached figures are the following:

| | | |
|---|---|---|
| ASTM D6814-02(2018) | % | Devulcanization degree |
| ASTM D2240-15(2021) | Shore A | Hardness |
| ASTM D412-16(2021) | Mpa | Tensile |
| ASTM D624-00(2020) | N/mm | Tear |
| UNI7716:2000 | % | Rebound |
| UNI 9185:1988 | mm3 | Abrasion |
| ASTM D395-18(2018) | % | Compression Set |
| ASTM D5992-96(2018) | Mpa | Dynamic |
| ASTM D1646-19a(2019) | MU | Mooney Viscosity |
| ASTM D5289-19a(2019) | min | Curing |

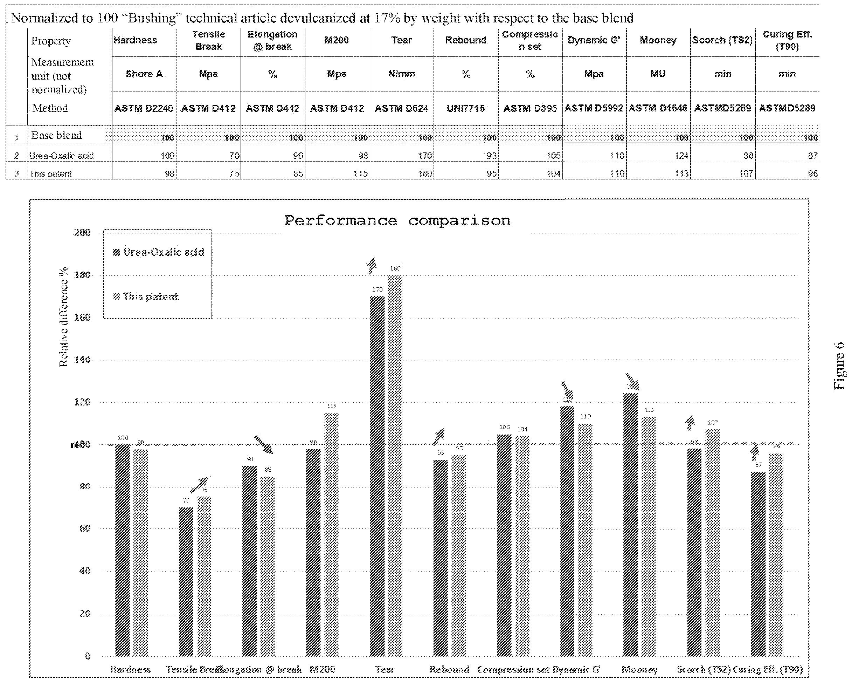

For the technical article (for example "Bushing"), as evident from the attached Figure 6, a significant increase in the tear strength, tensile strength, rebound, scorch (t5) and curing efficiency was found (t90). Furthermore, extremely important aspects for this application, a normalization of the Mooney viscosity and an improvement in the dynamic properties, essential for the absorption of vibrations, were observed.

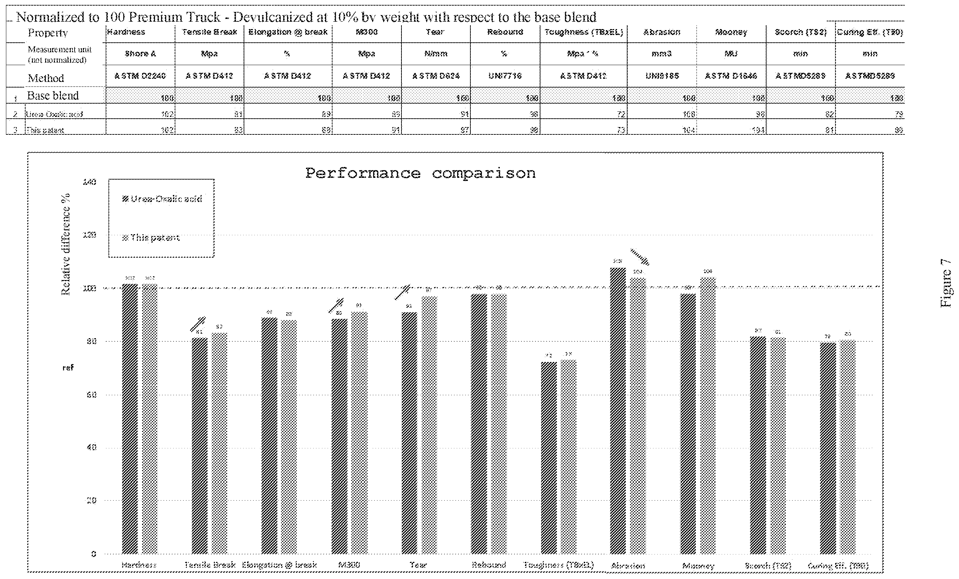

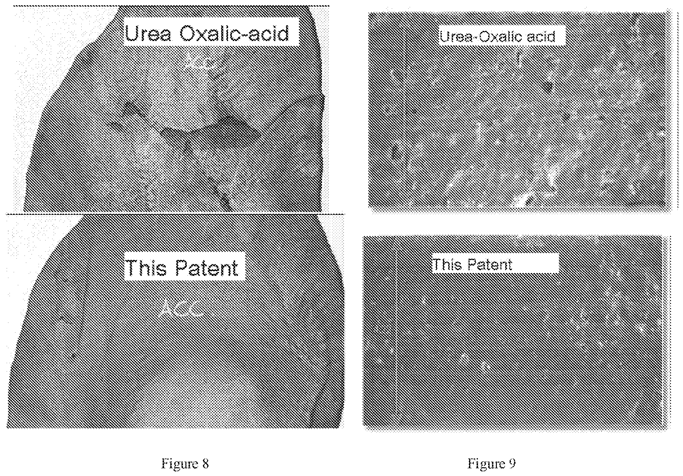

For the Tyre, truck tread - Premium Truck Tyre, as evident from the attached Figure 7, a significant increase in the tensile strength, tear resistance, modulus at 300% elongation, and a normalization of abrasion was observed. Furthermore, an extremely important aspect for both these applications, an improvement in the appearance of the blend was observed (as shown in figures 8 and 9), both in the raw blend (before vulcanization) and in the blend after vulcanization, a clear sign of obtaining of a better and more intense devulcanization. On comparing the photographs of figures 8 and 9, in fact, it is evident that the ELT particles are no longer visible in the blend object of the present invention, whereas they are still evident in the blend according to the state of the art, obtained with the oxalic acid-urea adduct.

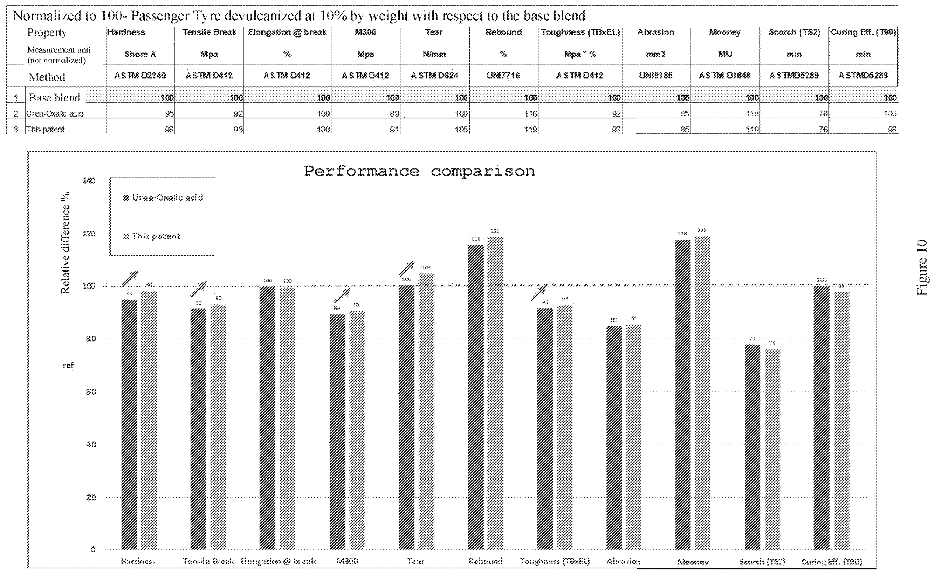

For the Tyre, car tread - Passenger Tyre, as is evident from figure 10, a significant increase in the tensile strength, in the modulus at 100% elongation, in the Toughness was detected. Particularly interesting for the sector is the increase beyond the reference in tear resistance.

For the footwear - Sole, the devulcanized product obtained from its own processing waste was added to the base blend in the amount of 50% by weight.

The sector does not provide for particularly critical technical-mechanical requirements, but rather requires that the processability and recolourability (understood as the possibility of mass recolouring the blends containing the devulcanized product) is optimal.

It has been verified that the re-use of the devulcanized product according to the state of the art, leads to obtaining a vulcanized blend with an orange-peel appearance and which is difficult to recolour. The non-recolourability is due to the fact that the dye does not penetrate sufficiently into the devulcanized product according to the state of the art and consequently the vulcanized blend shows very evident streaks and aesthetic defects, even with low percentages of devulcanized product.

With the devulcanized product according to the present invention, on the other hand, the processability is improved and the colourability, for example recolouring to black or grey, is homogeneous and free of defects.

## Claims

1. A devulcanizing additive for vulcanized elastomers, in particular sulfur-vulcanized rubbers, consisting of
- an acid-base adduct obtained starting from a dicarboxylic organic acid having a number of carbon atoms ranging from 2 to 18 and from urea or mono-, di- or tri-substituted derivatives of urea having the following formula 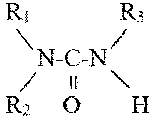 wherein R₁, R₂ and R₃, the same as or different from each other, can be hydrogen, linear alkyl chains having from 2 to 18 carbon atoms, preferably from 2 to 10;
- a peroxide, said peroxide being possibly mixed and absorbed on an inert inorganic filler, such as silicas, calcium carbonates, kaolins, aluminum silicates and clays, preferably absorbed on silica, calcium carbonate, aluminum silicates, kaolin or relative mixtures, more preferably on silica, calcium carbonate or relative mixtures; and
- possibly, a compatibilizer selected from ethylene-vinyl acetate copolymer, zinc dimethylacrylate, NR-g-PDMMMP (grafted copolymer of natural rubber (NR) and poly(dimethyl(methacryloyloxymethyl)phosphonate (PDMMMP)), liquid butadiene-isoprene copolymer rubber, GMA & MAH (grafted polyolefin polymers), epoxidized natural rubber, trans-polyoctenamer (TOR) and mixtures thereof,
wherein the acid-base adduct is obtained starting from organic dicarboxylic acid and urea or mono, di or trisubstituted derivatives of urea, in a molar ratio ranging from 1:1 to 1:2.

2. The additive according to claim 1, wherein the acid-base adduct is obtained starting from a dicarboxylic organic acid having a number of carbon atoms ranging from 2 to 10, and from urea or mono, di- or tri-substituted derivatives of urea, in a molar ratio preferably equal to 1:2.

3. The additive according to one or more of the previous claims, wherein the devulcanizing additive is a solid, preferably in the form of a powder.

4. The additive according to one or more of the previous claims, wherein the organic dicarboxylic acid is selected from oxalic acid, tartaric acid, malic acid, and is preferably oxalic acid and wherein the base is urea.

5. The additive according to one or more of the previous claims, wherein the acid-base adduct is an oxalic acid-urea adduct in a molar ratio of 1:2.

6. The additive according to one or more of the previous claims, wherein the peroxide is selected from an organic or inorganic peroxide, preferably an organic peroxide selected from dicumyl peroxide, 1,3-1,4-bis (tert-butylperoxyisopropyl) benzene, 2,5-dimethyl-2,5-di(tert-butylperoxy)hexane, Tert-butylcumyl peroxide, 2,5-dimethyl-2,5-di(tertbutylperoxy)hex-3-ine, n-butyl-4,4-di(tert-butylperoxy) valeriate, 1,1-di(tert-butylperoxy)-3,3,5-trimethylcyclohexane, di(2,4-dichlorobenzoyl) peroxide, and mixtures thereof, possibly with scorch protection, and is more preferably selected from dicumyl peroxide and 1,1-di(tert-butylperoxy)-3,3,5-trimethylcyclohexane, and is even more preferably dicumyl peroxide.

7. The additive according to one or more of the previous claims, wherein the peroxide is mixed and absorbed on an inert inorganic filler, such as silicas, calcium carbonates, kaolins, aluminum silicates and clays, preferably absorbed on silica, calcium carbonate, aluminum silicates, kaolin or relative mixtures, more preferably on silica, calcium carbonate or relative mixtures.

8. The additive according to one or more of the previous claims, wherein the peroxide is dicumyl peroxide absorbed on calcium carbonate and silica.

9. The additive according to one or more of the previous claims, wherein the compatibilizer is trans-polyoctenamer (TOR).

10. The additive according to claim 9, wherein the trans-polyoctenamer (TOR) is a powder or pure granulate.

11. Use of an additive according to one or more of the previous claims 1-8, for the devulcanization of sulfur-vulcanized rubbers, wherein, when the devulcanizing additive consists of adduct and peroxide, said additive is added in a quantity ranging from 0.5 to 5% by weight with respect to the weight of the elastomer to be devulcanized, the adduct being added in a quantity ranging from 0.4 to 4.5% by weight and the peroxide being added in a quantity ranging from 0.1 to 3% by weight with respect to the weight of the elastomer to be devulcanized.

12. Use of an additive according to one or more of the previous claims 9-10, for the devulcanization of sulfur-vulcanized rubbers, wherein, when the devulcanizing additive consists of adduct, peroxide and compatibilizer, said additive is added in a quantity ranging from 1 to 20% by weight with respect to the weight of the elastomer to be devulcanized, the adduct being added in a quantity ranging from 0.5 to 4.5% by weight, the peroxide being added in a quantity ranging from 0.1 to 3% by weight and the compatibilizer being added in a quantity ranging from 0.4 to 19.4% by weight with respect to the weight of the elastomer to be devulcanized.

13. A method for the devulcanization of sulfur-vulcanized rubbers, batchwise, which comprises the following steps:
i) mixing the devulcanizing additive consisting of
an acid-base adduct obtained starting from a dicarboxylic organic acid having a number of carbon atoms ranging from 2 to 18 and from urea or mono-, di- or tri-substituted derivative of urea having the following formula 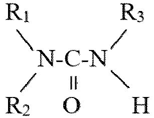
wherein R₁, R₂ and R₃, the same as or different from each other, can be hydrogen, linear alkyl chains having from 2 to 18 carbon atoms, and
a peroxide, said peroxide being possibly mixed and absorbed on an inert inorganic filler, such as silicas, calcium carbonates, kaolins, aluminum silicates and clays, preferably absorbed on silica, calcium carbonate, aluminum silicates, kaolin or relative mixtures, more preferably on silica, calcium carbonate or relative mixtures;
with the vulcanized elastomer to be devulcanized;
the acid base adduct being obtained starting from the dicarboxylic organic acid and from urea or the derivatives of mono-, di- or tri-substituted urea, in a molar ratio ranging from 1:1 to 1:2;
with the possible addition of a compatibilizer selected from ethylene-vinyl acetate copolymer, zinc dimethylacrylate, NR-g-PDMMMP (grafted copolymer of natural rubber (NR) and poly(dimethyl(methacryloyloxymethyl)phosphonate (PDMMMP)), liquid butadiene-isoprene copolymer rubber, GMA & MAH (grafted polyolefin polymers), epoxidized natural rubber, trans-polyoctenamer (TOR) and mixtures thereof;
when the devulcanizing additive consists of adduct and peroxide, said additive being added in a quantity ranging from 0.5 to 5% by weight with respect to the weight of the elastomer to be devulcanized, the adduct being added in a quantity ranging from 0.4 to 4.5% by weight and the peroxide being added in a quantity ranging from 0.1 to 3% by weight with respect to the weight of the elastomer to be devulcanized;
when the devulcanizing additive consists of adduct, peroxide and compatibilizer, said additive being added in a quantity ranging from 1 to 20% by weight with respect to the weight of the elastomer to be devulcanized, the adduct being added in a quantity ranging from 0.5 to 4.5% by weight, the peroxide being added in a quantity ranging from 0.1 to 3% by weight and the compatibilizer being added in a quantity ranging from 0.4 to 19.4% by weight with respect to the weight of the elastomer to be devulcanized;
ii) optional heating of the mixture thus obtained, preferably to a temperature ranging from 20 to 80°C;
iii) compression and mechanical stretching, in particular in an open or closed mixer;
iv) repetition of the compression and mechanical stretching step iv) for a number of times ranging from 0 to 40.

14. The method according to claim 13, wherein steps iv) and v) are effected by controlling the temperature which ranges from 20 to 110°C:

15. A method for the devulcanization of sulfur-vulcanized rubbers, in continuous, which comprises the following steps:
i) mixing the devulcanizing additive consisting of
an acid-base adduct obtained starting from a dicarboxylic organic acid having a number of carbon atoms ranging from 2 to 18 and from urea or mono-, di- or tri-substituted derivatives of urea having the following formula 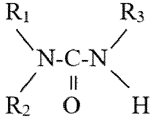
wherein R₁, R₂ and R₃, the same as or different from each other, can be hydrogen, linear alkyl chains having from 2 to 18 carbon atoms, and
a peroxide, said peroxide being possibly mixed and absorbed on an inert inorganic filler, such as silicas, calcium carbonates, kaolins, aluminum silicates and clays, preferably absorbed on silica, calcium carbonate, aluminum silicates, kaolin or relative mixtures, more preferably on silica, calcium carbonate or relative mixtures;
with the vulcanized elastomer to be devulcanized;
the acid base adduct being obtained starting from the dicarboxylic organic acid and from urea or the derivatives of mono-, di- or tri-substituted urea, in a molar ratio ranging from 1:1 to 1:2;
with the possible addition of a compatibilizer selected from ethylene-vinyl acetate copolymer, zinc dimethylacrylate, NR-g-PDMMMP (grafted copolymer of natural rubber (NR) and poly(dimethyl(methacryloyloxymethyl)phosphonate (PDMMMP)), liquid butadiene-isoprene copolymer rubber, GMA & MAH (grafted polyolefin polymers), epoxidized natural rubber, trans-polyoctenamer (TOR) and mixtures thereof;
when the devulcanizing additive consists of adduct and peroxide, said additive being added in a quantity ranging from 0.5 to 5% by weight with respect to the weight of the elastomer to be devulcanized, the adduct being added in a quantity ranging from 0.4 to 4.5% by weight and the peroxide being added in a quantity ranging from 0.1 to 3% by weight with respect to the weight of the elastomer to be devulcanized;
when the devulcanizing additive consists of adduct, peroxide and compatibilizer, said additive being added in a quantity ranging from 1 to 20% by weight with respect to the weight of the elastomer to be devulcanized, the adduct being added in a quantity ranging from 0.5 to 4.5% by weight, the peroxide being added in a quantity ranging from 0.1 to 3% by weight and the compatibilizer being added in a quantity ranging from 0.4 to 19.4% by weight with respect to the weight of the elastomer to be devulcanized;
ii) optional heating of the mixture thus obtained, preferably to a temperature ranging from 20 to 80°C;
iii) extrusion of the devulcanized product.

16. The method according to any of claims 13 to 15, which provides for the use in steps i) and ii) of a devulcanizing additive according to one or more of claims 2 to 12.

17. A devulcanized product obtained with the method according to any of claims 13 to 16, suitable for being used as raw material in blends with virgin elastomers to obtain sulfur-vulcanized rubbers, in a percentage ranging from 5% to 100%, preferably from 20% to 60%, by weight, with respect to the weight of the blend.

## Patentansprüche

1. Devulkanisierendes Additiv für vulkanisierte Elastomere, insbesondere schwefelvulkanisierte Kautschuke, bestehend aus
- einem Säure-Base-Addukt, erhalten ausgehend von einer organischen Dicarbonsäure mit einer Anzahl von Kohlenstoffatomen im Bereich von 2 bis 18 und von Harnstoff oder ein-, zwei- oder dreifach substituierten Derivaten des Harnstoffs mit der folgenden Formel 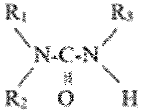 wobei R₁, R₂ und R₃, die gleich oder voneinander verschieden sind, Wasserstoff, lineare Alkylketten mit 2 bis 18 Kohlenstoffatomen, vorzugsweise von 2 bis 10, sein können;
- einem Peroxid, wobei das Peroxid möglicherweise auf einem inerten anorganischen Füllstoff wie Kieselsäuren, Calciumcarbonaten, Kaolinen, Aluminiumsilikaten und Tonen gemischt und absorbiert wird, vorzugsweise absorbiert auf Kieselsäure, Calciumcarbonat, Aluminiumsilikaten, Kaolin oder relativen Mischungen, bevorzugter auf Kieselsäure, Calciumcarbonat oder relativen Mischungen; und
- gegebenenfalls einem Kompatibilisator, ausgewählt aus Ethylen-Vinylacetat-Copolymer, Zinkdimethylacrylat, NR-g-PDMMMP (gepfropftes Copolymer aus Naturkautschuk (NR) und Poly(dimethyl(methacryloyloxymethyl)phosphonat (PDMMMP)), flüssigem Butadien-Isopren-Copolymerkautschuk, GMA & MAH (gepfropfte Polyolefinpolymere), epoxidiertem Naturkautschuk, trans-Polyoctenamer (TOR) und Mischungen davon,
wobei das Säure-Base-Addukt ausgehend von organischer Dicarbonsäure und Harnstoff oder ein-, zwei- oder dreifach substituierten Derivaten des Harnstoffs in einem Molverhältnis im Bereich von 1:1 bis 1:2 erhalten wird.

2. Additiv nach Anspruch 1, wobei das Säure-Base-Addukt ausgehend von einer organischen Dicarbonsäure mit einer Anzahl von Kohlenstoffatomen im Bereich von 2 bis 10 und von Harnstoff oder ein-, zwei- oder dreifach substituierten Derivaten des Harnstoffs in einem Molverhältnis vorzugsweise gleich 1:2 erhalten wird.

3. Additiv nach einem oder mehreren der vorhergehenden Ansprüche, wobei das devulkanisierende Additiv ein Feststoff, vorzugsweise in Form eines Pulvers, ist.

4. Additiv nach einem oder mehreren der vorhergehenden Ansprüche, wobei die organische Dicarbonsäure aus Oxalsäure, Weinsäure, Äpfelsäure ausgewählt ist und vorzugsweise Oxalsäure ist und wobei die Base Harnstoff ist.

5. Additiv nach einem oder mehreren der vorhergehenden Ansprüche, wobei das Säure-Base-Addukt ein Oxalsäure-Harnstoff-Addukt in einem Molverhältnis von 1:2 ist.

6. Additiv nach einem oder mehreren der vorhergehenden Ansprüche, wobei das Peroxid ausgewählt ist aus einem organischen oder anorganischen Peroxid, vorzugsweise einem organischen Peroxid, ausgewählt aus Dicumylperoxid, 1,3-1,4-Bis(tert-butylperoxyisopropyl)benzol, 2,5-Dimethyl-2,5-di(tert-butylperoxy)hexan, tert-Butylcumylperoxid, 2,5-Dimethyl-2,5-di(tert-butylperoxy)hex-3-in, n-Butyl-4,4-di(tert-butylperoxy)valeriat, 1,1-Di(tert-butylperoxy)-3,3,5-trimethylcyclohexan, Di (2,4-dichlorbenzoyl)peroxid und Mischungen davon, möglicherweise mit Anbrennschutz, und bevorzugter aus Dicumylperoxid und 1,1-Di(tert-butylperoxy)-3,3,5-trimethylcyclohexan ausgewählt ist und noch bevorzugter Dicumylperoxid ist.

7. Additiv nach einem oder mehreren der vorhergehenden Ansprüche, wobei das Peroxid auf einem inerten anorganischen Füllstoff wie Kieselsäuren, Calciumcarbonaten, Kaolinen, Aluminiumsilikaten und Tonen gemischt und absorbiert wird, vorzugsweise absorbiert auf Kieselsäure, Calciumcarbonat, Aluminiumsilikaten, Kaolin oder relativen Mischungen, bevorzugter auf Kieselsäure, Calciumcarbonat oder relativen Mischungen.

8. Additiv nach einem oder mehreren der vorhergehenden Ansprüche, wobei das Peroxid auf Calciumcarbonat und Kieselsäure absorbiertes Dicumylperoxid.

9. Additiv nach einem oder mehreren der vorhergehenden Ansprüche, wobei der Kompatibilisator trans-Polyoctenamer (TOR) ist.

10. Additiv nach Anspruch 9, wobei das trans-Polyoctenamer (TOR) ein Pulver oder reines Granulat ist.

11. Verwendung eines Additivs nach einem oder mehreren der vorhergehenden Ansprüche 1-8 zur Devulkanisation von schwefelvulkanisierten Kautschuken, wobei, wenn das devulkanisierende Additiv aus Addukt und Peroxid besteht, das Additiv in einer Menge im Bereich von 0,5 bis 5 Gew.- % bezogen auf das Gewicht des zu devulkanisierenden Elastomers zugegeben wird, wobei das Addukt in einer Menge im Bereich von 0,4 bis 4,5 Gew.- % zugegeben wird und das Peroxid in einer Menge im Bereich von 0,1 bis 3 Gew.- % bezogen auf das Gewicht des zu devulkanisierenden Elastomers zugegeben wird.

12. Verwendung eines Additivs nach einem oder mehreren der vorhergehenden Ansprüche 9-10 zur Devulkanisation von schwefelvulkanisierten Kautschuken, wobei, wenn das devulkanisierende Additiv aus Addukt, Peroxid und Kompatibilisator besteht, das Additiv in einer Menge im Bereich von 1 bis 20 Gew.- % bezogen auf das Gewicht des zu devulkanisierenden Elastomers zugegeben wird, wobei das Addukt in einer Menge im Bereich von 0,5 bis 4,5 Gew.- % zugegeben wird, wobei das Peroxid in einer Menge im Bereich von 0,1 bis 3 Gew.- % zugegeben wird und wobei der Kompatibilisator in einer Menge im Bereich von 0,4 bis 19,4 Gew.- % bezogen auf das Gewicht des zu devulkanisierenden Elastomers zugegeben wird.

13. Verfahren zur chargenweisen Devulkanisation von schwefelvulkanisierten Kautschuken, umfassend die folgenden Schritte:
i) Mischen des devulkanisierenden Additivs bestehend aus
einem Säure-Base-Addukt, erhalten ausgehend von einer organischen Dicarbonsäure mit einer Anzahl von Kohlenstoffatomen im Bereich von 2 bis 18 und von Harnstoff oder ein-, zwei- oder dreifach substituiertem Derivat des Harnstoffs mit der folgenden Formel 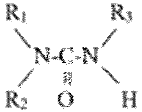
wobei R₁, R₂ und R₃, die gleich oder voneinander verschieden sind, Wasserstoff, lineare Alkylketten mit 2 bis 18 Kohlenstoffatomen sein können, und
einem Peroxid, wobei das Peroxid möglicherweise auf einem inerten anorganischen Füllstoff wie Kieselsäuren, Calciumcarbonaten, Kaolinen, Aluminiumsilikaten und Tonen gemischt und absorbiert wird, vorzugsweise absorbiert auf Kieselsäure, Calciumcarbonat, Aluminiumsilikaten, Kaolin oder relativen Mischungen, bevorzugter auf Kieselsäure, Calciumcarbonat oder relativen Mischungen;
mit dem zu devulkanisierenden vulkanisierten Elastomer;
wobei das Säure-Base-Addukt ausgehend von der organischen Dicarbonsäure und von Harnstoff oder den Derivaten des ein-, zwei- oder dreifach substituierten Harnstoffs in einem Molverhältnis im Bereich von 1:1 bis 1:2 erhalten wird;
mit dem möglichen Zusatz eines Kompatibilisators, ausgewählt aus Ethylen-Vinylacetat-Copolymer, Zinkdimethylacrylat, NR-g-PDMMMP (gepfropftes Copolymer aus Naturkautschuk (NR) und Poly(dimethyl(methacryloyloxymethyl)phosphonat (PDMMMP)), flüssigem Butadien-Isopren-Copolymerkautschuk, GMA & MAH (gepfropfte Polyolefinpolymere), epoxidiertem Naturkautschuk, trans-Polyoctenamer (TOR) und Mischungen davon;
wenn das devulkanisierende Additiv aus Addukt und Peroxid besteht, wobei das Additiv in einer Menge im Bereich von 0,5 bis 5 Gew.- % bezogen auf das Gewicht des zu devulkanisierenden Elastomers zugegeben wird, wobei das Addukt in einer Menge im Bereich von 0,4 bis 4,5 Gew.- % zugegeben wird und wobei das Peroxid in einer Menge im Bereich von 0,1 bis 3 Gew.- % bezogen auf das Gewicht des zu devulkanisierenden Elastomers zugegeben wird;
wenn das devulkanisierende Additiv aus Addukt, Peroxid und Kompatibilisator besteht, wobei das Additiv in einer Menge im Bereich von 1 bis 20 Gew.- % bezogen auf das Gewicht des zu devulkanisierenden Elastomers zugegeben wird, wobei das Addukt in einer Menge im Bereich von 0,5 bis 4,5 Gew.- % zugegeben wird, wobei das Peroxid in einer Menge im Bereich von 0,1 bis 3 Gew.- % zugegeben wird und wobei der Kompatibilisator in einer Menge im Bereich von 0,4 bis 19,4 Gew.- % bezogen auf das Gewicht des zu devulkanisierenden Elastomers zugegeben wird;
ii) optionales Erhitzen der so erhaltenen Mischung, vorzugsweise auf eine Temperatur im Bereich von 20 bis 80 °C;
iii) Kompression und mechanische Streckung, insbesondere in einem offenen oder geschlossenen Mischer;
iv) Wiederholung des Kompressions- und mechanischen Streckschritts iv) für eine Anzahl von Malen im Bereich von 0 bis 40.

14. Verfahren nach Anspruch 13, wobei die Schritte iv) und v) durch Steuern der Temperatur, die im Bereich von 20 bis 110 °C liegt, bewirkt werden.

15. Verfahren zur kontinuierlichen Devulkanisation von schwefelvulkanisierten Kautschuken, umfassend die folgenden Schritte:
i) Mischen des devulkanisierenden Additivs bestehend aus
einem Säure-Base-Addukt, erhalten ausgehend von einer organischen Dicarbonsäure mit einer Anzahl von Kohlenstoffatomen im Bereich von 2 bis 18 und von Harnstoff oder ein-, zwei- oder dreifach substituierten Derivaten des Harnstoffs mit der folgenden Formel 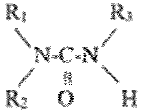
wobei R₁, R₂ und R₃, die gleich oder voneinander verschieden sind, Wasserstoff, lineare Alkylketten mit 2 bis 18 Kohlenstoffatomen sein können, und
einem Peroxid, wobei das Peroxid möglicherweise auf einem inerten anorganischen Füllstoff wie Kieselsäuren, Calciumcarbonaten, Kaolinen, Aluminiumsilikaten und Tonen gemischt und absorbiert wird, vorzugsweise absorbiert auf Kieselsäure, Calciumcarbonat, Aluminiumsilikaten, Kaolin oder relativen Mischungen, bevorzugter auf Kieselsäure, Calciumcarbonat oder relativen Mischungen;
mit dem zu devulkanisierenden vulkanisierten Elastomer;
wobei das Säure-Base-Addukt ausgehend von der organischen Dicarbonsäure und von Harnstoff oder den Derivaten des ein-, zwei- oder dreifach substituierten Harnstoffs in einem Molverhältnis im Bereich von 1:1 bis 1:2 erhalten wird;
mit dem möglichen Zusatz eines Kompatibilisators, ausgewählt aus Ethylen-Vinylacetat-Copolymer, Zinkdimethylacrylat, NR-g-PDMMMP (gepfropftes Copolymer aus Naturkautschuk (NR) und Poly(dimethyl(methacryloyloxymethyl)phosphonat (PDMMMP)), flüssigem Butadien-Isopren-Copolymerkautschuk, GMA & MAH (gepfropfte Polyolefinpolymere), epoxidiertem Naturkautschuk, trans-Polyoctenamer (TOR) und Mischungen davon;
wenn das devulkanisierende Additiv aus Addukt und Peroxid besteht, wobei das Additiv in einer Menge im Bereich von 0,5 bis 5 Gew.- % bezogen auf das Gewicht des zu devulkanisierenden Elastomers zugegeben wird, wobei das Addukt in einer Menge im Bereich von 0,4 bis 4,5 Gew.- % zugegeben wird und wobei das Peroxid in einer Menge im Bereich von 0,1 bis 3 Gew.- % bezogen auf das Gewicht des zu devulkanisierenden Elastomers zugegeben wird;
wenn das devulkanisierende Additiv aus Addukt, Peroxid und Kompatibilisator besteht, wobei das Additiv in einer Menge im Bereich von 1 bis 20 Gew.- % bezogen auf das Gewicht des zu devulkanisierenden Elastomers zugegeben wird, wobei das Addukt in einer Menge im Bereich von 0,5 bis 4,5 Gew.- % zugegeben wird, wobei das Peroxid in einer Menge im Bereich von 0,1 bis 3 Gew.- % zugegeben wird und wobei der Kompatibilisator in einer Menge im Bereich von 0,4 bis 19,4 Gew.- % bezogen auf das Gewicht des zu devulkanisierenden Elastomers zugegeben wird;
ii) optionales Erhitzen der so erhaltenen Mischung, vorzugsweise auf eine Temperatur im Bereich von 20 bis 80 °C;
iii) Extrusion des devulkanisierten Produkts.

16. Verfahren nach einem der Ansprüche 13 bis 15, das in den Schritten i) und ii) die Verwendung eines devulkanisierenden Additivs nach einem oder mehreren der Ansprüche 2 bis 12 vorsieht.

17. Devulkanisiertes Produkt, erhalten mit dem Verfahren nach einem der Ansprüche 13 bis 16, geeignet zur Verwendung als Rohmaterial in Gemischen mit neuen Elastomeren, um schwefelvulkanisierte Kautschuke in einem Prozentsatz im Bereich von 5 bis 100 Gew.- %, vorzugsweise von 20 bis 60 Gew.- % bezogen auf das Gewicht des Gemisches zu erhalten.

## Revendications

1. Additif de dévulcanisation pour des élastomères vulcanisés, en particulier des caoutchoucs vulcanisés au soufre, consistant en
- un adduit acide-base obtenu à partir d'un acide organique dicarboxylique ayant un nombre d'atomes de carbone allant de 2 à 18 et de l'urée ou de dérivés mono-, di- ou tri-substitués de l'urée ayant la formule suivante 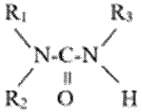 dans lequel R₁, R₂ et R₃, identiques ou différents l'un de l'autre, peuvent être de l'hydrogène, des chaînes alkyles linéaires ayant de 2 à 18 atomes de carbone, de préférence de 2 à 10 ;
- un peroxyde, ledit peroxyde étant éventuellement mélangé et absorbé sur une charge inorganique inerte, telle que des silices, des carbonates de calcium, des kaolins, des silicates d'aluminium et des argiles, de préférence absorbé sur de la silice, du carbonate de calcium, des silicates d'aluminium, du kaolin ou des mélanges relatifs, plus préférentiellement sur de la silice, du carbonate de calcium ou des mélanges relatifs ; et
- éventuellement, un agent de compatibilité choisi parmi le copolymère éthylène-acétate de vinyle, le diméthylacrylate de zinc, le NR-g-PDMMMP (copolymère greffé de caoutchouc naturel (NR) et de poly(diméthyl(méthacryloyloxyméthyl)phosphonate (PDMMMP)), le caoutchouc copolymère butadiène-isoprène liquide, le GMA & MAH (polymères polyoléfiniques greffés), le caoutchouc naturel époxydé, le trans-polyocténamère (TOR) et leurs mélanges,
dans lequel l'adduit acide-base est obtenu à partir d'un acide dicarboxylique organique et d'urée ou de dérivés mono, di ou trisubstitués de l'urée, dans un rapport molaire compris entre 1:1 et 1:2.

2. Additif selon la revendication 1, dans lequel l'adduit acide-base est obtenu à partir d'un acide organique dicarboxylique ayant un nombre d'atomes de carbone allant de 2 à 10, et de l'urée ou de dérivés mono, di- ou tri-substitués de l'urée, dans un rapport molaire de préférence égal à 1:2.

3. Additif selon l'une ou plusieurs des revendications précédentes, dans lequel l'additif de dévulcanisation est un solide, de préférence sous forme de poudre.

4. Additif selon l'une ou plusieurs des revendications précédentes, dans lequel l'acide dicarboxylique organique est choisi parmi l'acide oxalique, l'acide tartrique, l'acide malique, et est de préférence l'acide oxalique, et dans lequel la base est l'urée.

5. Additif selon l'une ou plusieurs des revendications précédentes, dans lequel l'adduit acide-base est un adduit acide oxalique-urée dans un rapport molaire de 1:2.

6. Additif selon l'une ou plusieurs des revendications précédentes, dans lequel le peroxyde est choisi parmi un peroxyde organique ou inorganique, de préférence un peroxyde organique choisi parmi le peroxyde de dicumyle, le 1,3-1,4-bis (tert-butylperoxyisopropyl) benzène, le 2,5-diméthyl-2,5-di(tert-butylperoxy)hexane, le peroxyde de tert-butylcumyl, le 2,5-diméthyl-2,5-di(tertbutylperoxy)hex-3-ine, le n-butyl-4,4-di(tert-butylperoxy) valeriate, le 1,1-di(tert-butylperoxy)-3,3,5-triméthylcyclohexane, le peroxyde de di(2,4-dichloro-benzoyle), et leurs mélanges, éventuellement avec une protection contre la brûlure, et est plus préférentiellement choisi parmi le peroxyde de dicumyle et le 1,1-di(tert-butylperoxy)-3,3,5-triméthylcyclohexane, et est encore plus préférentiellement le peroxyde de dicumyle.

7. Additif selon l'une ou plusieurs des revendications précédentes, dans lequel le peroxyde est mélangé et absorbé sur une charge inorganique inerte, telle que les silices, les carbonates de calcium, les kaolins, les silicates d'aluminium et les argiles, de préférence absorbé sur la silice, le carbonate de calcium, les silicates d'aluminium, le kaolin ou des mélanges relatifs, plus préférentiellement sur la silice, le carbonate de calcium ou des mélanges relatifs.

8. Additif selon l'une ou plusieurs des revendications précédentes, dans lequel le peroxyde est du peroxyde de dicumyle absorbé sur du carbonate de calcium et de la silice.

9. Additif selon l'une ou plusieurs des revendications précédentes, dans lequel l'agent de compatibilité est un trans-polyocténamère (TOR).

10. Additif selon la revendication 9, dans lequel le trans-polyocténamère (TOR) est une poudre ou un granulé pur.

11. Utilisation d'un additif selon l'une ou plusieurs des revendications précédentes 1 à 8, pour la dévulcanisation de caoutchoucs vulcanisés au soufre, dans laquelle, lorsque l'additif de dévulcanisation est constitué d'un adduit et d'un peroxyde, ledit additif est ajouté en une quantité allant de 0,5 à 5 % en poids par rapport au poids de l'élastomère à dévulcaniser, l'adduit étant ajouté en une quantité allant de 0,4 à 4,5 % en poids et le peroxyde étant ajouté en une quantité allant de 0,1 à 3 % en poids par rapport au poids de l'élastomère à dévulcaniser.

12. Utilisation d'un additif selon l'une ou plusieurs des revendications précédentes 9 à 10, pour la dévulcanisation de caoutchoucs vulcanisés au soufre, dans laquelle, lorsque l'additif de dévulcanisation est constitué d'un adduit, d'un peroxyde et d'un agent de compatibilité, ledit additif est ajouté en une quantité allant de 1 à 20 % en poids par rapport au poids de l'élastomère à dévulcaniser, l'adduit étant ajouté en une quantité allant de 0,5 à 4,5 % en poids, le peroxyde étant ajouté en une quantité allant de 0,1 à 3 % en poids et l'agent de compatibilité étant ajouté en une quantité allant de 0,4 à 19,4 % en poids par rapport au poids de l'élastomère à dévulcaniser.

13. Procédé de dévulcanisation de caoutchoucs vulcanisés au soufre, par lots, comprenant les étapes suivantes :
i) mélanger l'additif de dévulcanisation composé de
- un adduit acide-base obtenu à partir d'un acide organique dicarboxylique ayant un nombre d'atomes de carbone allant de 2 à 18 et de l'urée ou de dérivé mono-, di- ou tri-substitué de l'urée ayant la formule suivante 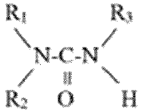
dans lequel R₁, R₂ et R₃, identiques ou différents l'un de l'autre, peuvent être de l'hydrogène, des chaînes alkyles linéaires ayant de 2 à 18 atomes de carbone, et
un peroxyde, ledit peroxyde étant éventuellement mélangé et absorbé sur une charge inorganique inerte, telle que des silices, des carbonates de calcium, des kaolins, des silicates d'aluminium et des argiles, de préférence absorbé sur de la silice, du carbonate de calcium, des silicates d'aluminium, du kaolin ou des mélanges relatifs, plus préférentiellement sur de la silice, du carbonate de calcium ou des mélanges relatifs ;
avec l'élastomère vulcanisé à dévulcaniser ;
l'adduit acide-base étant obtenu à partir de l'acide organique dicarboxylique et de l'urée ou des dérivés de l'urée mono-, di- ou tri-substitués, dans un rapport molaire allant de 1:1 à 1:2 ;
avec l'ajout éventuel d'un agent de compatibilité choisi parmi le copolymère éthylène-acétate de vinyle, le diméthylacrylate de zinc, le NR-g-PDMMMP (copolymère greffé de caoutchouc naturel (NR) et de poly(diméthyl(méthacryloyloxyméthyl)phosphonate (PDMMMP)), le caoutchouc copolymère butadiène-isoprène liquide, le GMA & MAH (polymères polyoléfiniques greffés), le caoutchouc naturel époxydé, le trans-polyocténamère (TOR) et les mélanges de ceux-ci ;
lorsque l'additif de dévulcanisation est constitué d'un adduit et d'un peroxyde, ledit additif étant ajouté en une quantité allant de 0,5 à 5 % en poids par rapport au poids de l'élastomère à dévulcaniser, l'adduit étant ajouté en une quantité allant de 0,4 à 4,5 % en poids et le peroxyde étant ajouté en une quantité allant de 0,1 à 3 % en poids par rapport au poids de l'élastomère à dévulcaniser ;
lorsque l'additif de dévulcanisation est constitué d'un adduit, d'un peroxyde et d'un agent de compatibilité, ledit additif étant ajouté en une quantité allant de 1 à 20 % en poids par rapport au poids de l'élastomère à dévulcaniser, l'adduit étant ajouté en une quantité allant de 0,5 à 4,5 % en poids, le peroxyde étant ajouté en une quantité allant de 0,1 à 3 % en poids et l'agent de compatibilité étant ajouté en une quantité allant de 0,4 à 19,4 % en poids par rapport au poids de l'élastomère à dévulcaniser ;
ii) chauffer facultativement le mélange ainsi obtenu, de préférence à une température allant de 20 à 80°C ;
iii) comprimer et étirer mécaniquement, notamment dans un mélangeur ouvert ou fermé ;
iv) répéter l'étape iv) de compression et d'étirement mécanique pendant un nombre de fois allant de 0 à 40.

14. Procédé selon la revendication 13, dans lequel les étapes iv) et v) sont effectuées en contrôlant la température qui varie de 20 à 110°C.

15. Procédé de dévulcanisation de caoutchoucs vulcanisés au soufre, m en continu, comprenant les étapes suivantes :
i) mélanger l'additif de dévulcanisation composé de
- un adduit acide-base obtenu à partir d'un acide organique dicarboxylique ayant un nombre d'atomes de carbone allant de 2 à 18 et de l'urée ou de dérivés mono-, di- ou tri-substitués de l'urée ayant la formule suivante 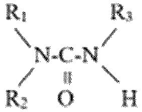
dans lequel R₁, R₂ et R₃, identiques ou différents l'un de l'autre, peuvent être de l'hydrogène, des chaînes alkyles linéaires ayant de 2 à 18 atomes de carbone, et
un peroxyde, ledit peroxyde étant éventuellement mélangé et absorbé sur une charge inorganique inerte, telle que des silices, des carbonates de calcium, des kaolins, des silicates d'aluminium et des argiles, de préférence absorbé sur de la silice, du carbonate de calcium, des silicates d'aluminium, du kaolin ou des mélanges relatifs, plus préférentiellement sur de la silice, du carbonate de calcium ou des mélanges relatifs ;
avec l'élastomère vulcanisé à dévulcaniser ;
l'adduit acide-base étant obtenu à partir de l'acide organique dicarboxylique et de l'urée ou des dérivés de l'urée mono-, di- ou tri-substitués, dans un rapport molaire allant de 1:1 à 1:2 ;
avec l'ajout éventuel d'un agent de compatibilité choisi parmi le copolymère éthylène-acétate de vinyle, le diméthylacrylate de zinc, le NR-g-PDMMMP (copolymère greffé de caoutchouc naturel (NR) et de poly(diméthyl(méthacryloyloxyméthyl)phosphonate (PDMMMP)), le caoutchouc copolymère butadiène-isoprène liquide, le GMA & MAH (polymères polyoléfiniques greffés), le caoutchouc naturel époxydé, le trans-polyocténamère (TOR) et les mélanges de ceux-ci ;
lorsque l'additif de dévulcanisation est constitué d'un adduit et d'un peroxyde, ledit additif étant ajouté en une quantité allant de 0,5 à 5 % en poids par rapport au poids de l'élastomère à dévulcaniser, l'adduit étant ajouté en une quantité allant de 0,4 à 4,5 % en poids et le peroxyde étant ajouté en une quantité allant de 0,1 à 3 % en poids par rapport au poids de l'élastomère à dévulcaniser ;
lorsque l'additif de dévulcanisation est constitué d'un adduit, d'un peroxyde et d'un agent de compatibilité, ledit additif étant ajouté en une quantité allant de 1 à 20 % en poids par rapport au poids de l'élastomère à dévulcaniser, l'adduit étant ajouté en une quantité allant de 0,5 à 4,5 % en poids, le peroxyde étant ajouté en une quantité allant de 0,1 à 3 % en poids et l'agent de compatibilité étant ajouté en une quantité allant de 0,4 à 19,4 % en poids par rapport au poids de l'élastomère à dévulcaniser ;
ii) chauffer facultativement le mélange ainsi obtenu, de préférence à une température allant de 20 à 80°C ;
iii) extruder un produit dévulcanisé.

16. Procédé selon l'une quelconque des revendications 13 à 15, qui prévoit l'utilisation aux étapes i) et ii) d'un additif de dévulcanisation selon l'une ou plusieurs des revendications 2 à 12.

17. Produit dévulcanisé obtenu par le procédé selon l'une quelconque des revendications 13 à 16, pouvant être utilisé comme matière première dans des mélanges avec des élastomères vierges pour obtenir des caoutchoucs vulcanisés au soufre, dans un pourcentage allant de 5 % à 100 %, de préférence de 20 % à 60 %, en poids, par rapport au poids du mélange.
